(19) **Europäisches Patentamt / European Patent Office / Office européen des brevets**

(11) **EP 3 547 230 A1**

(12) **EUROPEAN PATENT APPLICATION**
published in accordance with Art. 153(4) EPC

(43) Date of publication:
**02.10.2019 Bulletin 2019/40**

(51) Int Cl.:
**G06Q 10/06** (2012.01)

(21) Application number: **17873582.5**

(22) Date of filing: **23.10.2017**

(86) International application number:
**PCT/JP2017/038163**

(87) International publication number:
**WO 2018/096856 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2016 JP 2016228597**

(71) Applicant: **Hitachi, Ltd.**
**Tokyo 100-8280 (JP)**

(72) Inventors:
• **KOBAYASHI, Hideyuki**
**Tokyo 100-8280 (JP)**

• **TERADA, Hirofumi**
**Tokyo 100-8280 (JP)**
• **FUJIWARA, Shuuhei**
**Tokyo 100-8280 (JP)**
• **FUKUMOTO, Takashi**
**Tokyo 100-8280 (JP)**
• **MURAKAMI, Masahiro**
**Tokyo 100-8280 (JP)**
• **JYOUE, Kazutaka**
**Tokyo 100-8280 (JP)**
• **TANNO, Mitsuhiro**
**Tokyo 100-8280 (JP)**

(74) Representative: **Mewburn Ellis LLP**
**City Tower**
**40 Basinghall Street**
**London EC2V 5DE (GB)**

(54) **COMPANY INFORMATION SYSTEM AND COMPANY INFORMATION PROVIDING METHOD**

(57) The purpose of the present invention is to swiftly provide information corresponding to an update of a management operation policy.

This company information system 1 acquires a management operation policy including a management evaluation index, which relates to management among a plurality of achievement evaluation indexes, and a value of the management evaluation index; acquires an on-site operation policy including an on-site evaluation index, which relates to on-site work among the plurality of achievement evaluation indexes, and a value of the on-site evaluation index; acquires achievement evaluation index relationship information which defines a relationship between the plurality of achievement evaluation indexes; when the management operation policy is updated, updates the on-site operation policy according to the update of the management operation policy on the basis of the management operation policy and the achievement evaluation index relationship information; calculates, on the basis of the achievement evaluation index relationship information and a plurality of countermeasures prepared in advance, each prediction value of the plurality of achievement evaluation indexes in the case where the plurality of countermeasures are executed; and extracts, as an appropriate countermeasure, a countermeasure appropriate for the updated on-site operation policy from among the plurality of countermeasures, on the basis of the calculated prediction values and the updated on-site operation policy.

[Fig. 1]

**Description**

[Technical Field]

The present invention relates to a company information system and a company information providing method.

[Background Art]

PTL 1 indicates that: "An information management system 1 is a system for managing information of a hierarchized organization, and the information includes goal information that is configured in each layer. The information management system 1 includes: configuring means 2 which configures goal information for each layer; recording means 5 which records, in association with a layer, goal information configured by the configuring means 2; display means 4 which displays at least a layer of the organization and/or goal information; selecting means 3 which selects a specific layer from a layer display of the organization being displayed on the display means 4; and extracting means 6 which extracts goal information recorded in the recording means 5 with the selected layer as an index and which causes the display means 4 to display the extracted goal information".

[Citation List]

[Patent Literature]

[PTL 1]

Japanese Patent Application Publication No. 2004-318245

[Summary of Invention]

[Technical Problem]

Generally, a company organization is constituted by a management layer which makes management determinations and a plurality of on-site layers which operate sites. For example, in the case of a power producer, the on-site layers correspond to power plants.

In a company organization, in order to realize site operations that comply with a policy on business operations envisioned by the management layer, a top management configures a managerial level operation policy (hereinafter, a management operation policy) and an on-site manager configures an operational policy on on-site operations (hereinafter, an on-site operation policy) in order to achieve the management operation policy. An on-site worker makes day-to-day on-site determinations on the basis of the on-site operation policy.

For example, the on-site manager is a power plant director or the like and the on-site worker is a maintenance division leader or the like of the power plant. The power plant director configures the on-site operation policy on the basis of the management operation policy decided by the top management. In addition, when an abnormality occurs at the power plant, the maintenance division leader copes with the abnormality by selecting a countermeasure that is best suited to the on-site operation policy from a plurality of countermeasures prepared in advance.

PTL 1 describes a mechanism for accepting a goal configuration for each layer, storing layer information and a goal in association with each other, and displaying the associated layer information and the goal.

However, in PTL 1, since an on-site operation policy to be configured by an on-site layer in order to achieve a management operation policy cannot be specified, the on-site manager specifies, on the basis of know-how, an achievement evaluation index which the on-site manager considers relevant to the management operation policy and configures a value thereof.

Therefore, in conventional art, there is a possibility that variations may occur in a type or a value of an achievement evaluation index for configuring an on-site operation policy among on-site managers and that the management operation policy and on-site operation policies may not be consistent with each other. As a result, even if an on-site operation policy is configured, there is a possibility that the management operation policy cannot be achieved by the configured on-site operation policy.

In addition, when the management operation policy is updated and contents of the update are absent from the know-how of an on-site manager, there is a possibility that updating an on-site operation policy in accordance with the update of the management operation policy may involve a considerable amount of effort. As a result, there is a possibility that a period of time during which an on-site operation policy that is yet to reflect the update of the management operation policy is continuously used to make on-site determinations may become prolonged.

The present invention has been made in consideration of the problems described above and an object thereof is to provide a company information system and a company information providing method capable of swiftly providing information corresponding to an update of a management operation policy.

[Solution to Problem]

In order to solve the problems described above, a company information system according to an aspect of the present invention is a company information system that provides information in accordance with a management operation policy of a company, the company information system including at least one computer, wherein the computer is configured to: acquire a management operation policy that is a policy on business operations, the management operation policy including a management evaluation index, which relates to management among a plurality of achievement evaluation indexes prepared in advance, and a value of the management evaluation index; acquire an on-site operation policy that is an operational policy on on-site operations, the on-site operation policy including an on-site evaluation index, which relates to on-site work among the plurality of achievement evaluation indexes, and a value of the on-site evaluation index; acquire achievement evaluation index relationship information which defines a relationship between the plurality of achievement evaluation indexes; when the management operation policy is updated, update the on-site operation policy according to the update of the management operation policy on the basis of the management operation policy and the achievement evaluation index relationship information; calculate, on the basis of the achievement evaluation index relationship information and a plurality of countermeasures prepared in advance, each prediction value of the plurality of achievement evaluation indexes in the case where the plurality of countermeasures are executed; and extract, as an appropriate countermeasure, a countermeasure appropriate for the updated on-site operation policy from among the plurality of countermeasures, on the basis of the calculated prediction values and the updated on-site operation policy.

[Advantageous Effects of Invention]

According to the present invention, when a management operation policy is updated, an on-site operation policy can be updated in accordance with the update of the management operation policy and on-site determinations that comply with the management operation policy can be supported.

[Brief Description of Drawings]

Fig. 1 is a logical configuration diagram of a company information system.
Fig. 2 is a hardware configuration diagram of a company information system.
Fig. 3 is an explanatory diagram showing stored contents of a storage device of an achievement evaluation index relationship management device.
Fig. 4 is an explanatory diagram showing stored contents of a storage device of a management operation policy management device.
Fig. 5 is an explanatory diagram showing stored contents of a storage device of an on-site operation policy management device.
Fig. 6 is an explanatory diagram showing stored contents of a storage device of a countermeasure determination support device.
Fig. 7 is a relationship diagram showing a relationship between achievement evaluation indexes.
Fig. 8 is an explanatory diagram showing an operation plan and a power generation plan.
Fig. 9 is an explanatory diagram showing a power generation end thermal efficiency plan.
Fig. 10 is an explanatory diagram showing an in-plant ratio plan.
Fig. 11 is a table configuration diagram of an achievement evaluation index relationship.
Fig. 12 is a table configuration diagram related to constraints of a management operation policy.
Fig. 13 is a table configuration diagram related to target values of a management operation policy.
Fig. 14 is a table configuration diagram related to priorities of a management operation policy.
Fig. 15 is a table configuration diagram related to constraints of an on-site operation policy.
Fig. 16 is a table configuration diagram related to target values of an on-site operation policy.
Fig. 17 is a table configuration diagram related to priorities of an on-site operation policy.
Fig. 18 is a flow chart showing processes of a management operation policy registration/ transmission unit.
Fig. 19 is a configuration diagram of a registration screen of a management operation policy.
Fig. 20 is a flow chart showing processes of an on-site operation policy registration/ transmission unit.
Fig. 21 is a flow chart continuing from Fig. 20.

Fig. 22 is a flow chart showing processes of a management/ on-site index exchange unit.

Fig. 23 is a configuration diagram of a screen for registering constraints as an on-site operation policy.

Fig. 24 is a configuration diagram of a screen for registering target values as an on-site operation policy.

Fig. 25 is a configuration diagram of a screen for registering priorities as an on-site operation policy.

Fig. 26 is a flow chart showing respective processes of an achievement evaluation index influence calculation unit and an appropriate countermeasure extraction unit.

Fig. 27 is a configuration diagram of a screen to be provided to a site.

Fig. 28 is an overall configuration diagram of a case where a user receives services of a company information system via a communication network.

Fig. 29 is a flow chart according to a second embodiment which shows a process of providing, before configuring a management operation policy, previous on-site operation policies related to the management operation policy.

Fig. 30 is a flow chart according to a third embodiment and which shows a process of determining, when a relationship of achievement evaluation indexes is updated, whether or not a management operation policy needs to be reviewed.

Fig. 31 is a configuration diagram of a company information system according to a fourth embodiment.

[Description of Embodiments]

Hereinafter, embodiments of the present invention will be described with reference to the drawings. A company information system 1 according to the present embodiment includes, for example, an on-site operation policy management device 4 which manages an on-site operation policy and a countermeasure determination support device 5.

The on-site operation policy management device 4 includes, for example, a management/ on-site index exchange unit 47 and an on-site operation policy registration/ transmission unit 48. When the management/ on-site index exchange unit 47 receives an update of a management operation policy, the management/ on-site index exchange unit 47 calculates a change amount to an on-site operation policy that is required with the change in the management operation policy on the basis of relationship information between achievement evaluation indexes 433 and updates the on-site operation policy. The on-site operation policy registration/ transmission unit 48 transmits the updated on-site operation policy to the countermeasure determination support device 5.

The countermeasure determination support device 5 includes, for example, an achievement evaluation index influence calculation unit 57 and an appropriate countermeasure extraction unit 58. The achievement evaluation index influence calculation unit 57 calculates, on the basis of a plurality of countermeasures and relationship information between achievement evaluation indexes 533, a prediction value of an achievement evaluation index when executing each countermeasure. The appropriate countermeasure extraction unit 58 extracts, on the basis of the prediction values calculated by the achievement evaluation index influence calculation unit 57 and an on-site operation policy 534 acquired from the on-site operation policy management device 4, a countermeasure of which the prediction value is most suitable for the on-site operation policy 534.

The company information system 1 according to the present embodiment is capable of, upon receiving an update of a management operation policy, swiftly providing information helpful for on-site determinations suitable for the updated management operation policy.

First Embodiment

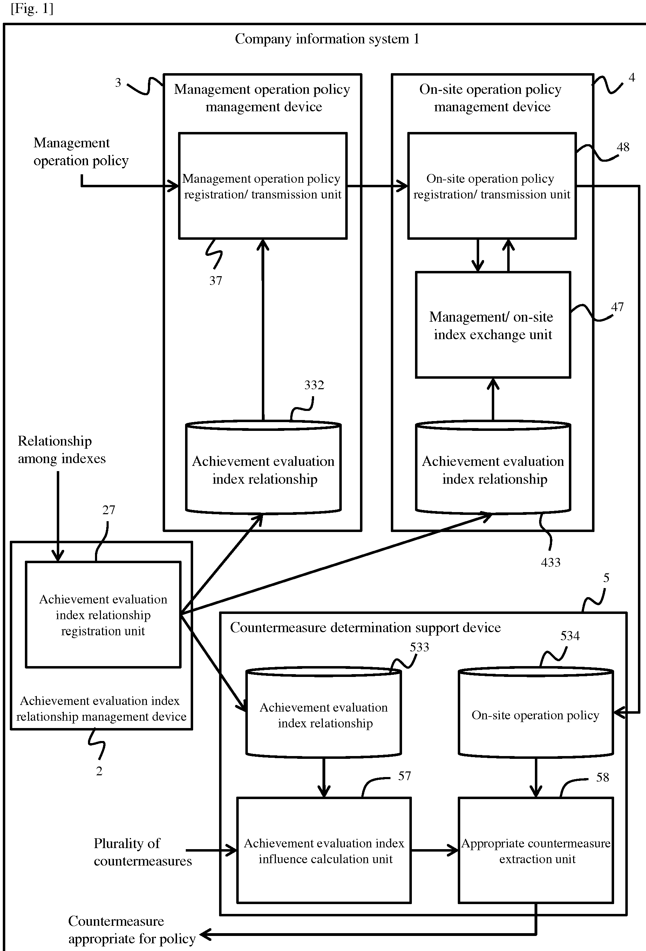

A first embodiment will be described with reference to Figs. 1 to 28. In the present embodiment, a case where the company information system 1 is applied to an organization of a power producer will be mainly described. However, in addition to a power producer, the company information system 1 according to the present embodiment can also be applied to organizations of a water and sewage supplier, a gas supplier, and the like.

Fig. 1 shows an example of a logical configuration diagram of the company information system 1. The company information system 1 includes, for example, an achievement evaluation index relationship management device 2, a management operation policy management device 3, the on-site operation policy management device 4, and the countermeasure determination support device 5. Each of the devices 2 to 5 can be configured as a separate computer or may be provided in one computer or in three computers or less. Here, a case where each of the devices 2 to 5 is configured as a separate computer will be described.

The achievement evaluation index relationship management device 2 includes an achievement evaluation index relationship registration unit 27. The achievement evaluation index relationship management device 2 accepts a registration, an update, and a deletion of relationships between achievement evaluation indexes and manages the relationships. When a relationship between achievement evaluation indexes is changed, the achievement evaluation index relationship management device 2 transmits information notifying the change to the management operation policy management device 3, the on-site operation policy management device 4, and the countermeasure determination support device 5. Alternatively, the achievement evaluation index relationship management device 2 accepts a reference to a changed location of achievement evaluation index relationship information from each of the devices 3 to 5.

The achievement evaluation index relationship registration unit 27 accepts and registers achievement evaluation index relationship information indicating a relationship between achievement evaluation indexes from a user. The achievement evaluation index relationship information includes, for example, a relational expression for calculating an achievement evaluation index and a number which uniquely specifies a device that manages plan information to be used as a basis of the calculation. The achievement evaluation index relationship registration unit 27 transmits the achievement evaluation index relationship information to the management operation policy management device 3, the on-site operation policy management device 4, and the countermeasure determination support device 5. Alternatively, the achievement evaluation index relationship registration unit 27 accepts a reference request to the achievement evaluation index relationship information from each of the devices 3 to 5. It should be noted that the achievement evaluation index relationship information is updated as appropriate in accordance with, for example, an alteration of the organization, an addition or abolition of a facility, or a completion or dissolution of a contract. When the achievement evaluation index relationship information is updated, each of the devices 3 to 5 is notified accordingly.

An achievement evaluation index relationship 332 held by the management operation policy management device 3, an achievement evaluation index relationship 433 held by the on-site operation policy management device 4, and an achievement evaluation index relationship 533 held by the countermeasure determination support device 5 are copies of the achievement evaluation index relationship managed by the achievement evaluation index relationship management device 2. By having each of the devices 3 to 5 hold information on the achievement evaluation index relationship, processes in each of the devices 3 to 5 can be swiftly performed. However, in addition to this configuration, when necessary, each of the devices 3 to 5 can appropriately refer to the information on the achievement evaluation index relationship managed by the achievement evaluation index relationship management device 2. In this case, consumption of a memory of each of the devices 3 to 5 can be reduced.

The management operation policy management device 3 accepts an input of information (a management operation policy) related to a policy on business operations from the top management and manages the information. When the management operation policy management device 3 accepts an input of the management operation policy, the management operation policy management device 3 transmits the management operation policy to the on-site operation policy management device 4. The management operation policy management device 3 includes, for example, a management operation policy registration/ transmission unit 37 and the achievement evaluation index relationship 332.

The achievement evaluation index relationship 332 is a database that manages achievement evaluation index relationship information acquired from the achievement evaluation index relationship management device 2. As described above, achievement evaluation index relationship information includes a relational expression for calculating an achievement evaluation index, a number which uniquely specifies a device that manages plan information to be used as a basis for calculating the achievement evaluation index, and the like.

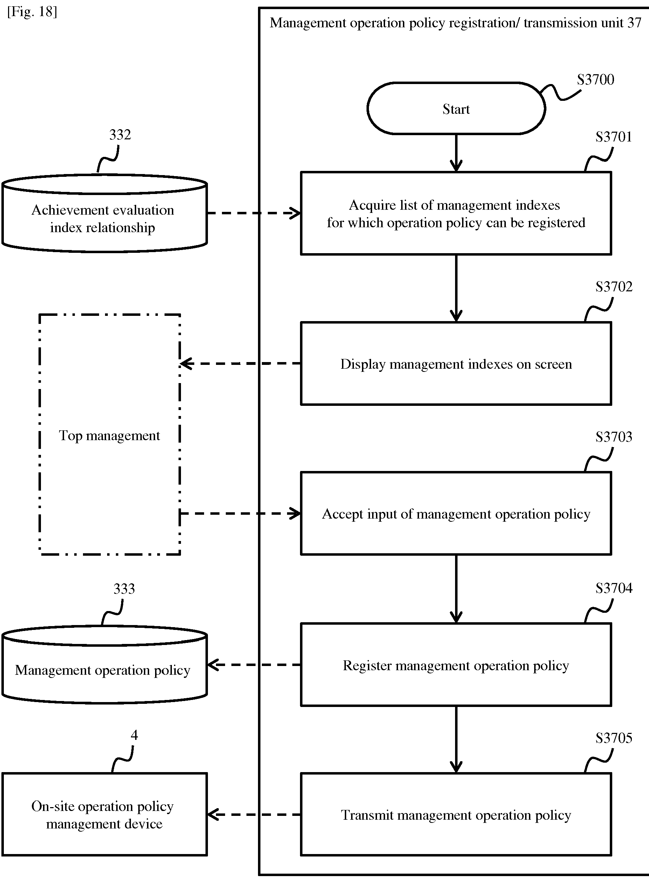

The management operation policy registration/ transmission unit 37 is a processing unit which accepts an input of a management operation policy from the user and transmits the management operation policy to the on-site operation policy management device 4. The user inputs a management operation policy to the management operation policy management device 3 by configuring an input of information related to a policy (hereinafter, a management operation policy) on business operations such as constraints, target values, and priorities among achievement evaluation indexes with respect to a management-level achievement evaluation index (a management evaluation index) registered in the achievement evaluation index relationship 332. A management operation policy registration/ transmission process performed by the management operation policy registration/ transmission unit 37 will be described later with reference to Fig. 18.

When the on-site operation policy management device 4 accepts a change (an update) of the management operation policy from the management operation policy management device 3, the on-site operation policy management device 4 calculates a change amount to an on-site operation policy that is required with the change and updates an on-site operation policy. When the on-site operation policy management device 4 accepts a management operation policy from the management operation policy management device 3, the on-site operation policy management device 4 instructs an on-site manager such as a power plant director to configure an operational policy (hereinafter, an on-site operation policy) on on-site operations on the basis of the management operation policy. The on-site operation policy management device 4 accepts an input from the on-site manager and manages the input on-site operation policy. The on-site operation policy management device 4 transmits the decided on-site operation policy to the countermeasure determination support device 5.

The on-site operation policy management device 4 includes, for example, the management/ on-site index exchange unit 47, the on-site operation policy registration/ transmission unit 48, and the achievement evaluation index relationship 433.

The achievement evaluation index relationship 433 is a database that manages achievement evaluation index relationship information acquired from the achievement evaluation index relationship management device 2.

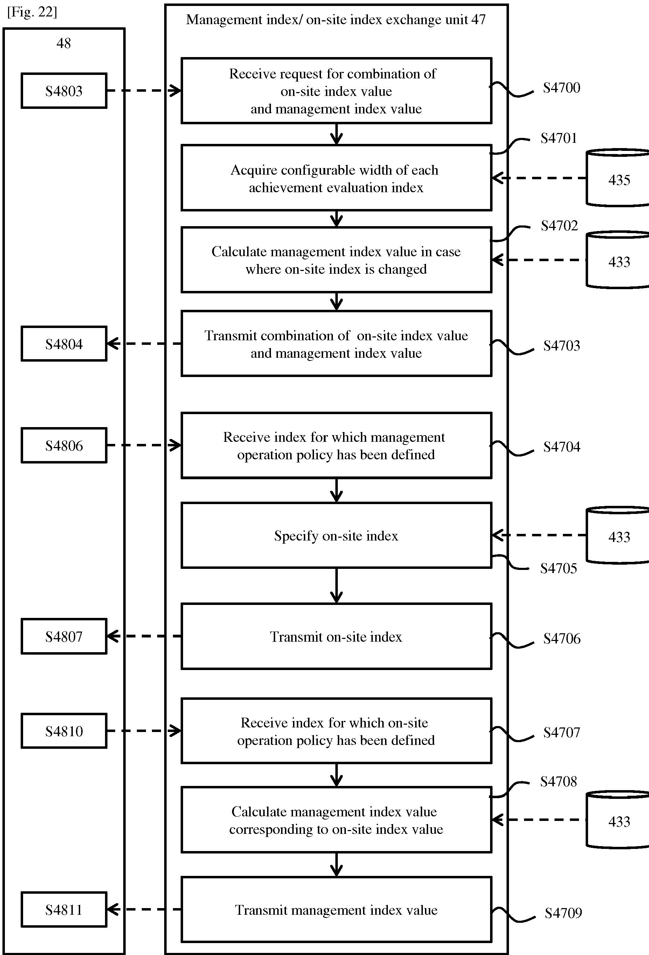

The achievement evaluation index relationship 433 manages a correspondence between a management evaluation index that is a management-level achievement evaluation index and an on-site evaluation index that is a site-level achievement evaluation index. The management/ on-site index exchange unit 47 is a processing unit which, on the basis of the achievement evaluation index relationship 433, (1) specifies a related on-site evaluation index from a management evaluation index, and (2) predicts and calculates a value of the management evaluation index from a value of the on-site evaluation index. A management/ on-site index exchange process performed by the management/ on-site index exchange unit 47 will be described later with reference to Fig. 22.

The on-site operation policy registration/ transmission unit 48 is a processing unit which calculates a change amount to an on-site operation policy that is required with a change in the management operation policy received from the management operation policy management device 3 and which updates the on-site operation policy. The on-site operation policy registration/ transmission unit 48 is a processing unit which presents the user with an on-site operation policy related to the management operation policy received from the management operation policy management device 3, accepts an input of an on-site operation policy from the user, and presents the user with a value of a management evaluation index in a case where the input on-site operation policy is implemented. Furthermore, the on-site operation policy registration/ transmission unit 48 transmits information of the decided on-site operation policy to the countermeasure determination support device 5. Examples of methods of presenting the information to the user include displaying the information on a display, printing the information with a printer, and reading out the information as audio data.

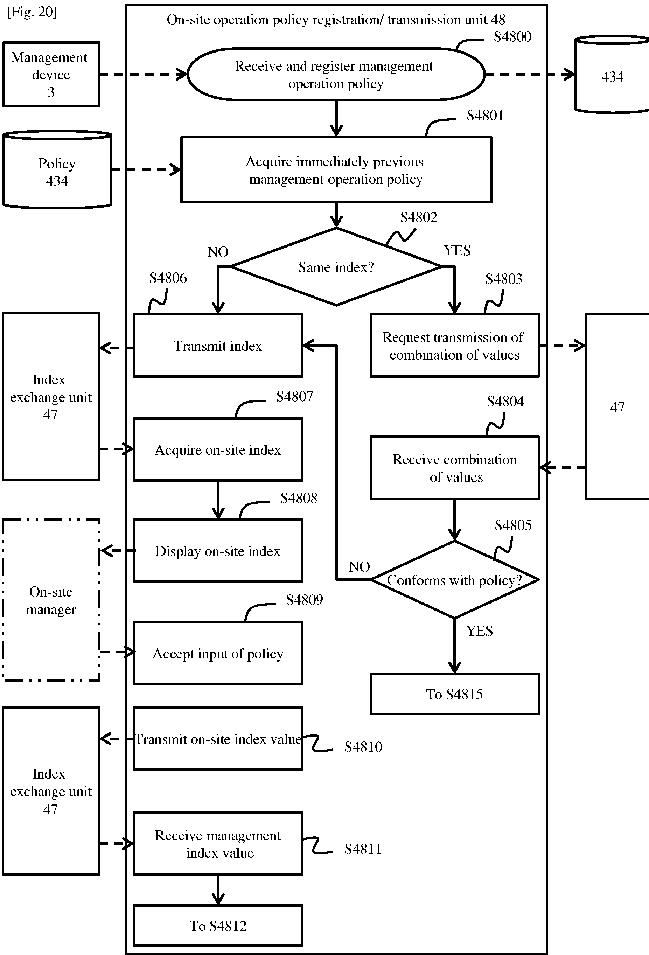

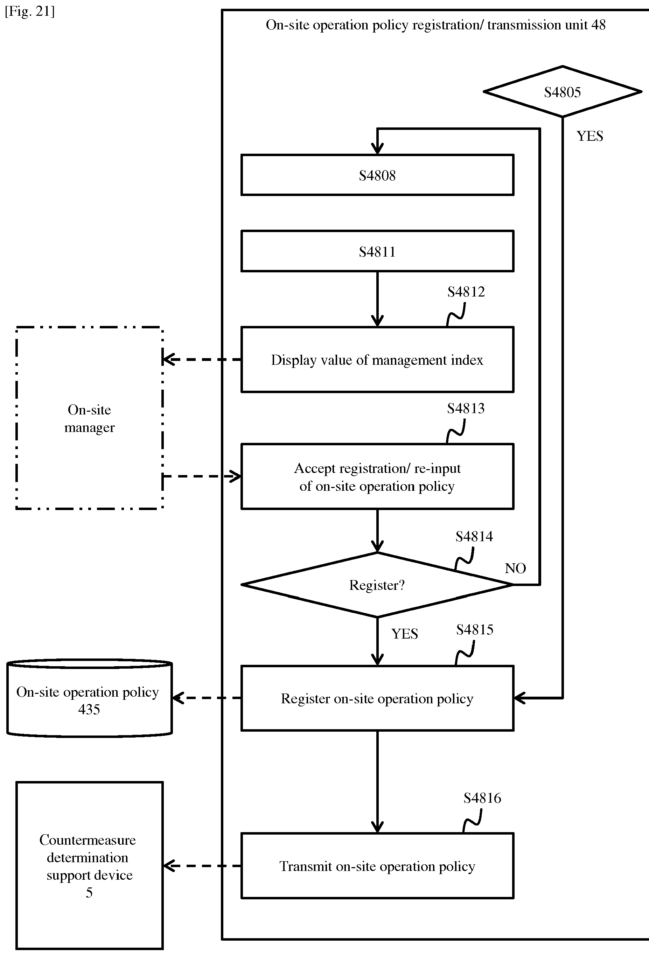

An on-site operation policy registration/ transmission process performed by the on-site operation policy registration/ transmission unit 48 will be described later with reference to Figs. 20 and 21.

The countermeasure determination support device 5 supports an on-site determination with respect to a coping strategy in a case where an abnormality occurs on site. When an abnormality occurs in an on-site facility, the countermeasure determination support device 5 predicts a value of each achievement evaluation index in a case where a plurality of countermeasures are respectively executed with respect to the abnormality, extracts a countermeasure suitable for the on-site operation policy on the basis of the prediction result, and presents the extracted countermeasure to the user. The countermeasure determination support device 5 includes, for example, the achievement evaluation index influence calculation unit 57, the appropriate countermeasure extraction unit 58, the achievement evaluation index relationship 533, and the on-site operation policy 534.

The achievement evaluation index relationship 533 is a database that manages achievement evaluation index relationship information. The on-site operation policy 534 is a database that manages on-site operation policies including constraints, target values, and priorities among achievement evaluation indexes that have been configured with respect to the on-site operation policy received from the on-site operation policy management device 4.

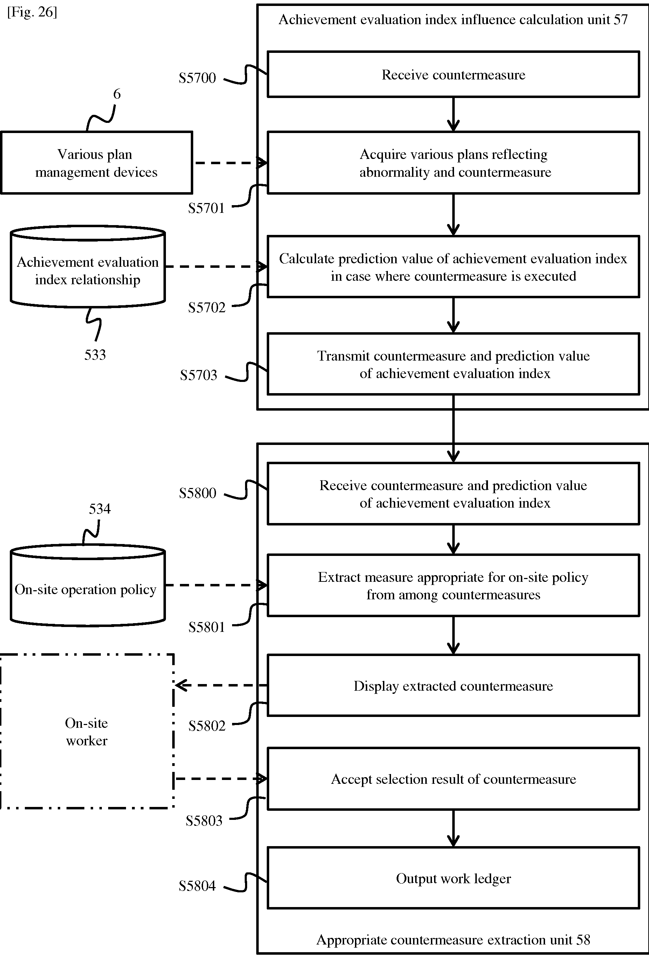

The achievement evaluation index influence calculation unit 57 is a processing unit which predicts, on the basis of the achievement evaluation index relationship 533, a value of each achievement evaluation index in a case where each countermeasure is executed. An achievement evaluation index influence calculation process performed by the achievement evaluation index influence calculation unit 57 will be described later with reference to Fig. 26.

The appropriate countermeasure extraction unit 58 is a processing unit which, on the basis of the value of each achievement evaluation index predicted by the achievement evaluation index influence calculation unit 57, extracts a countermeasure suitable for the on-site operation policy 534 and presents the extracted countermeasure to the user. An appropriate countermeasure extraction process performed by the appropriate countermeasure extraction unit 58 will be described later with reference to Fig. 26.

In this case, a "function of acquiring and storing the management operation policy including the management evaluation index and the value of the management evaluation index" corresponds to the management operation policy registration/ transmission unit 37 or the management operation policy management device 3. A "function of acquiring and storing the on-site operation policy including the on-site evaluation index and the value of the on-site evaluation index" corresponds to the on-site operation policy registration/ transmission unit 48 or the on-site operation policy management device 4.

A "function of specifying, upon accepting an update of the management operation policy, the on-site evaluation index corresponding to the management evaluation index included in the accepted management operation policy, on the basis of the achievement evaluation index relationship information" corresponds to the management/ on-site index exchange unit 47 or the on-site operation policy management device 4. A "function of providing a user with the specified on-site evaluation index and accepting an input of the on-site operation policy by having the user configure a value with respect to the on-site evaluation index" corresponds to the on-site operation policy registration/ transmission unit 48 or the on-site operation policy management device 4.

A "function of calculating a prediction value of the management evaluation index on the basis of the value configured to the on-site evaluation index and the achievement evaluation index relationship information" corresponds to the management/ on-site index exchange unit 47 or the on-site operation policy management device 4. A "function of providing the user with the calculated prediction value and updating the on-site operation policy when accepting a decision on the on-site operation policy from the user" corresponds to the on-site operation policy registration/ transmission unit 48 or the on-site operation policy management device 4.

A "function of respectively calculating, on the basis of the achievement evaluation index relationship information and a plurality of countermeasures prepared in advance, prediction values of the plurality of achievement evaluation indexes in a case where the plurality of countermeasures are executed" corresponds to the achievement evaluation index influence calculation unit 57 or the countermeasure determination support device 5. A "function of extracting, as an appropriate countermeasure, a countermeasure most appropriate for the updated on-site operation policy from among the plurality of countermeasures, on the basis of the calculated prediction values and the updated on-site operation policy" corresponds to the appropriate countermeasure extraction unit 58 or the countermeasure determination support device 5.

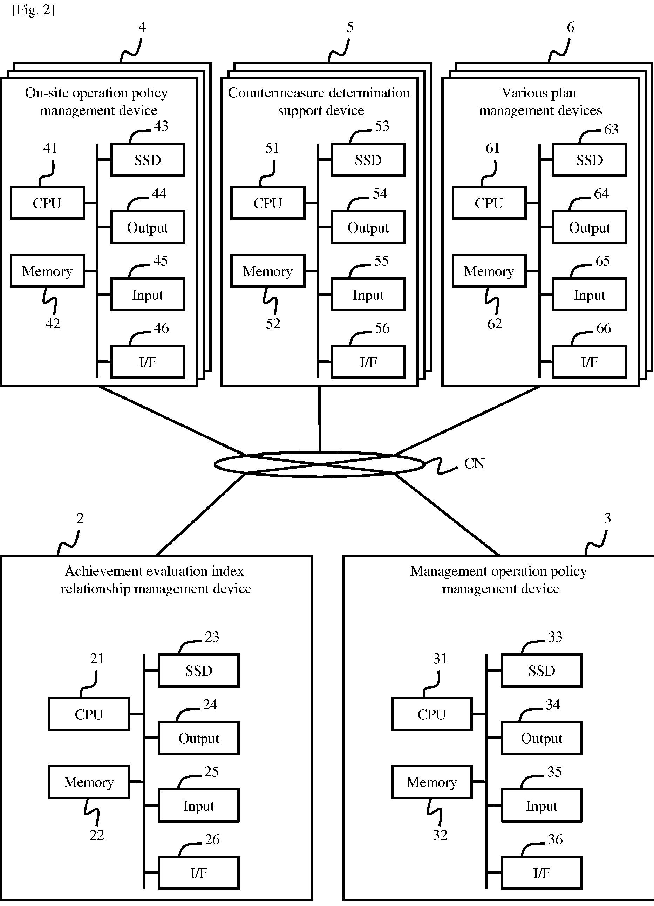

Fig. 2 shows an example of a hardware configuration of the company information system 1. The company information system 1 includes, for example, the achievement evaluation index relationship management device 2, the management operation policy management device 3, the on-site operation policy management device 4, the countermeasure determination support device 5, various plan management devices 6, and a communication path CN. An example in which each of the devices 2 to 6 is constituted by a separate computer will now be described. Alternatively, a configuration may be adopted in which functions of the respective devices 2 to 6 are realized using a smaller number of computers.

The communication path CN connects the achievement evaluation index relationship management device 2, the management operation policy management device 3, the on-site operation policy management device 4, the countermeasure determination support device 5, and the various plan management devices 6. The communication path CN may use either wired communication or wireless communication. Any communications standard may be adopted.

The achievement evaluation index relationship management device 2 includes, for example, a CPU (Central Processing Unit) 21, a memory 22, a storage device 23, an output device 24, an input device 25, and a communication interface 26. The communication interface 26 is, for example, an interface such as a wired LAN (Local Area Network) card or a wireless LAN card. The communication interface 26 communicates with the management operation policy management device 3, the on-site operation policy management device 4, the countermeasure determination support device 5, and the various plan management devices 6 via the communication path CN.

The storage device 23 is, for example, a device such as a hard disk or a flash memory (SSD: Solid State Drive) which stores information including computer programs and data. Data stored in the storage device 23 will be described later. In the diagrams, storage devices are denoted as "SSDs".

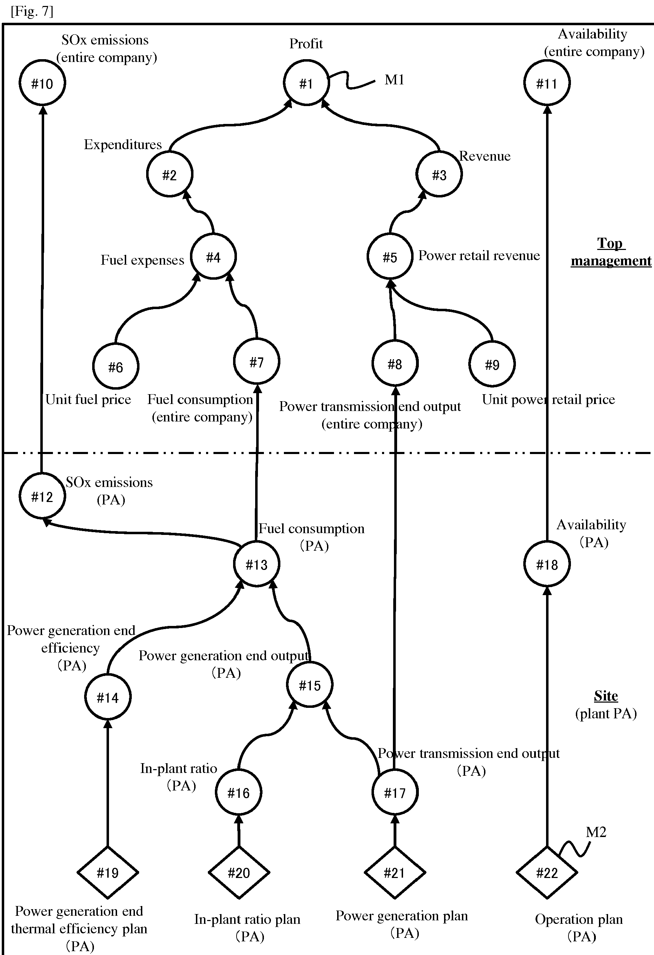

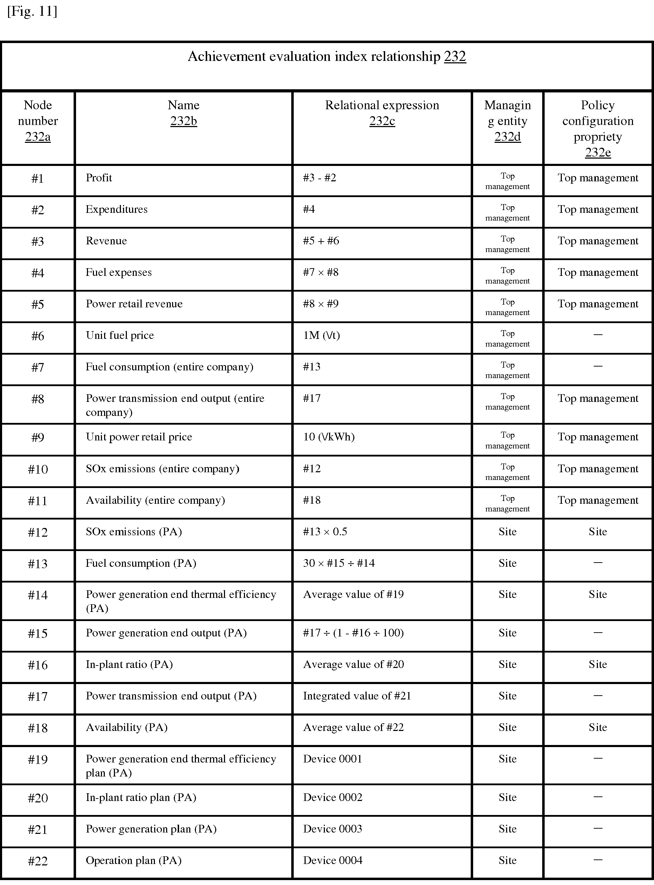

Examples of the input device 25 include devices such as a keyboard, a mouse, a touch panel, and a voice recognition device. A manager of the company information system 1 uses the input device 25 to input a relationship between achievement evaluation indexes and the like. Details of a relationship between achievement evaluation indexes will be described later with reference to Figs. 7 and 11.

The output device 24 is, for example, a display device which displays information input from the input device 25, output information of the respective computer programs, and data of respective databases. The output device 24 can present a relationship between achievement evaluation indexes to the user by, for example, displaying Fig. 7 on a screen.

The management operation policy management device 3 includes, for example, a CPU 31, a memory 32, a storage device 33, an output device 34, an input device 35, and a communication interface 36 in a similar manner to the achievement evaluation index relationship management device 2. Since the respective devices 31 to 36 realize similar functions to the respective devices 21 to 26 described above, a description will be omitted. It should be noted that descriptions of other devices 41 to 46, 51 to 56, and 61 to 66 mentioned below will be omitted in a similar manner.

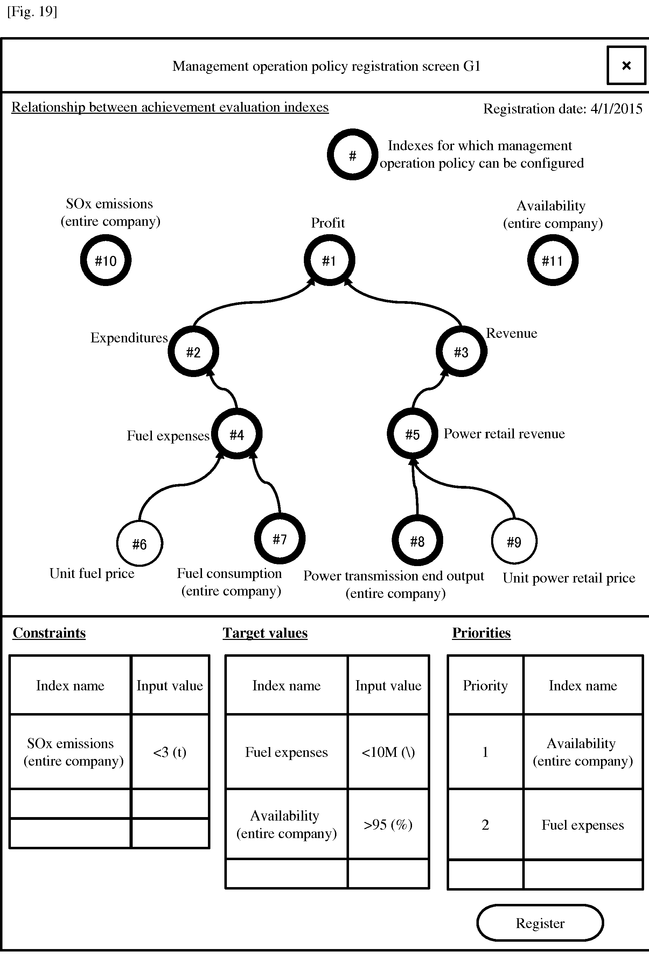

Details of an accounting operation policy that is input via the input device 35 will be described later with reference to Fig. 19. The output device 34 can present items of management evaluation indexes that enable a management operation policy to be registered to the user by, for example, displaying Fig. 19 on a screen.

The on-site operation policy management device 4 is provided on, for example, a per-site basis. The on-site operation policy management device 4 includes, for example, a CPU 41, a memory 42, a storage device 43, an output device 44, an input device 45, and a communication interface 46.

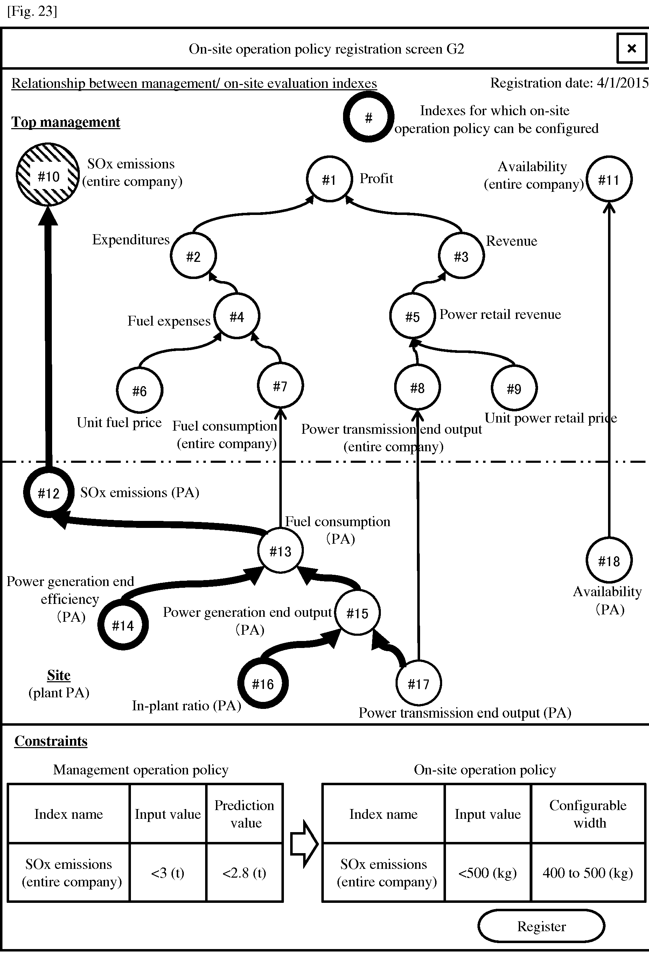

Details of an on-site operation policy that is input via the input device 45 will be described later with reference to Figs. 23, 24, and 25. The output device 44 can present items of on-site evaluation indexes that enable an on-site operation policy to be registered, prediction values of management evaluation indexes with respect to the on-site evaluation indexes input by the user, and the like to the user by, for example, displaying the screens shown in Figs. 23, 24, and 25.

The countermeasure determination support device 5 is, for example, a device which is present on a per-site basis together with the on-site operation policy management device 4.

The countermeasure determination support device 5 includes, for example, a CPU 51, a memory 52, a storage device 53, an output device 54, an input device 55, and a communication interface 56.

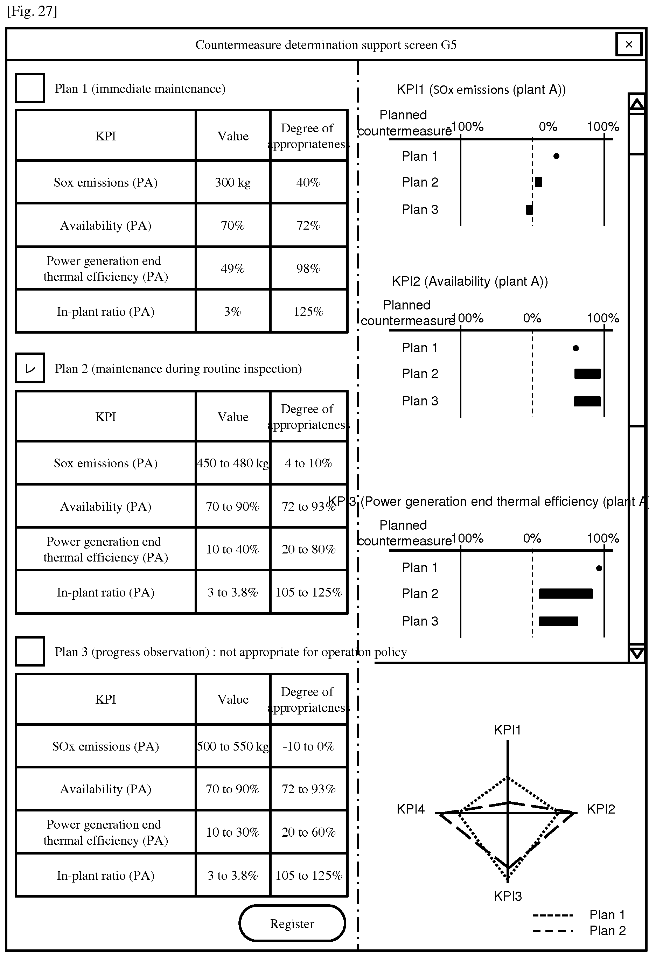

A countermeasure can be input from the input device 55. Details of a countermeasure selection screen will be described later with reference to Fig. 27. The output device 54 can present values of achievement evaluation indexes in a case where each countermeasure is executed, a degree of appropriateness with respect to the on-site operation policy of each countermeasure, and like to the user by displaying the screen shown in Fig. 27.

The various plan management devices 6 are devices that manage various pieces of plan information associated with on-site work such as a power generation plan and an operation plan. The various plan management devices 6 are provided on, for example, a per-plan basis. The various plan management devices 6 can also be referred to as a "plan management device 6".

The various plan management devices 6 include, for example, a CPU 61, a memory 62, a storage device 63, an output device 64, an input device 65, and a communication interface 66.

Various pieces of plan information can be input from the input device 65. The output device 64 displays various pieces of input plan information, output information of the respective computer programs, and data of respective databases.

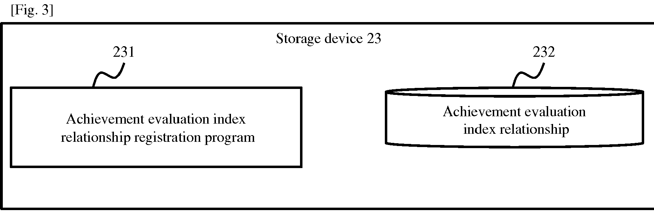

Fig. 3 shows an example of data stored by the storage device 23 of the achievement evaluation index relationship management device 2. As a computer program, the storage device 23 stores, for example, an achievement evaluation index relationship registration program 231. In addition, as data, the storage device 23 stores, for example, an achievement evaluation index relationship 232.

The achievement evaluation index relationship registration program 231 realizes the achievement evaluation index relationship registration unit 27 by being loaded to the memory 22 and executed by the CPU 21.

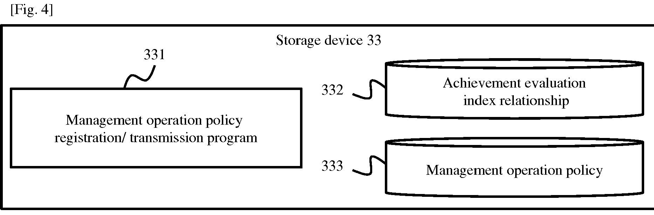

Fig. 4 shows an example of data stored by the storage device 33 of the management operation policy management device 3. As a computer program, the storage device 33 stores, for example, a management operation policy registration/ transmission program 331. As data, the storage device 33 stores, for example, the achievement evaluation index relationship 332 and a management operation policy 333.

The management operation policy registration/ transmission program 331 realizes the management operation policy registration/ transmission unit 37 by being loaded to the memory 32 and executed by the CPU 31. The achievement evaluation index relationship 332 is a copy of the achievement evaluation index relationship 232 acquired from the achievement evaluation index relationship management device 2.

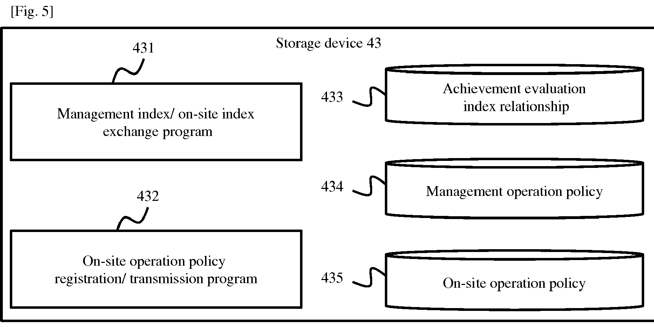

Fig. 5 shows an example of data stored by the storage device 43 of the on-site operation policy management device 4. As computer programs, the storage device 43 stores, for example, a management/ on-site index exchange program 431 and an on-site operation policy registration/ transmission program 432. As data, the storage device 43 stores, for example, the achievement evaluation index relationship 433, a management operation policy 434, and an on-site operation policy 435.

The management/ on-site index exchange program 431 realizes the management/ on-site index exchange unit 47 by being loaded to the memory 42 and executed by the CPU 41. The on-site operation policy registration/ transmission program 432 realizes the on-site operation policy registration/ transmission unit 48 by being loaded to the memory 42 and executed by the CPU 41.

The achievement evaluation index relationship 433 is a copy of the achievement evaluation index relationship 232 acquired from the achievement evaluation index relationship management device 2. The management operation policy 434 is a copy of the management operation policy 333 transmitted by the management operation policy management device 3 to the on-site operation policy management device 4.

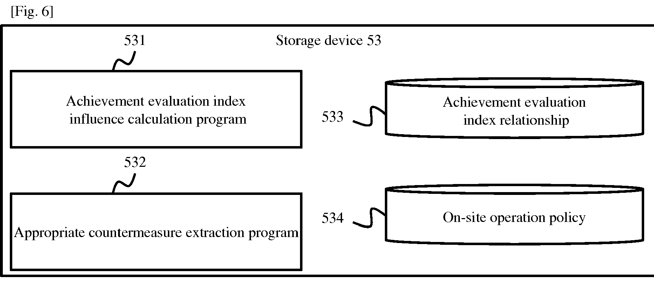

Fig. 6 shows an example of data stored by the storage device 53 of the countermeasure determination support device 5. As computer programs, the storage device 53 stores, for example, an achievement evaluation index influence calculation program 531 and an appropriate countermeasure extraction program 532. As data, the storage device 53 stores, for example, the achievement evaluation index relationship 533 and an on-site operation policy 534.

The achievement evaluation index influence calculation program 531 realizes the achievement evaluation index influence calculation unit 57 by being loaded to the memory 52 and executed by the CPU 51. The appropriate countermeasure extraction program 532 realizes the appropriate countermeasure extraction unit 58 by being loaded to the memory 52 and executed by the CPU 51.

The achievement evaluation index relationship 533 is a copy of the achievement evaluation index relationship 232 acquired from the achievement evaluation index relationship management device 2. The on-site operation policy 534 is a copy of the on-site operation policy 435 transmitted by the on-site operation policy management device 4 to the countermeasure determination support device 5.

Fig. 7 shows an example of a relationship between achievement evaluation indexes. In the present embodiment, a relationship between achievement evaluation indexes is constituted by a combination of a plurality of elements including circular elements M1 and diamond-shaped elements M2.

A circular element M1 denotes an achievement evaluation index. A circular element M1 is defined by a relational expression which uses other circular elements M1 and diamond-shaped elements M2 and which is represented by four arithmetic operations or a conditional statement.

Diamond-shaped elements M2 denote various pieces of plan information such as a power generation plan and an operation plan. The diamond-shaped elements M2 are defined by a number that uniquely specifies the various plan management devices 6.

A circular element M1 (an achievement evaluation index) assumes a value. On the other hand, the diamond-shaped elements M2 (various plans) assume time-sequential values.

A power generation plan (#21) shown on a lower side of Fig. 7 is a planned value of a power amount to be supplied by a target plant. An operation plan (#22) shown on the lower side of Fig. 7 is a planned value of a maximum power amount that can be supplied by the target plant. Therefore, the value of the power generation plan is equal to or smaller than the value of the operation plan.

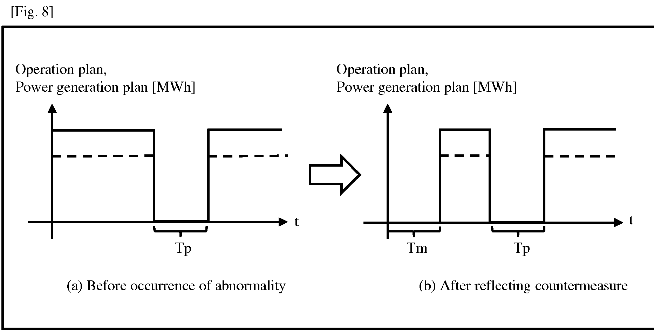

Fig. 8 shows an example of a power generation plan or an operation plan. Fig. 8(a) shows a plan before an abnormality occurs and Fig.8(b) shows a plan after coping with the abnormality. A vertical axis represents a power amount and a horizontal axis represents time. In Fig. 8(a), it is shown that, before the occurrence of the abnormality, power generation is stopped and an inspection is performed during a routine inspection period Tp. In Fig. 8(b), it is shown that, due to the occurrence of the abnormality, a maintenance work period Tm is configured before the routine inspection period Tp and the abnormality is coped with by maintenance work without waiting for a routine inspection.

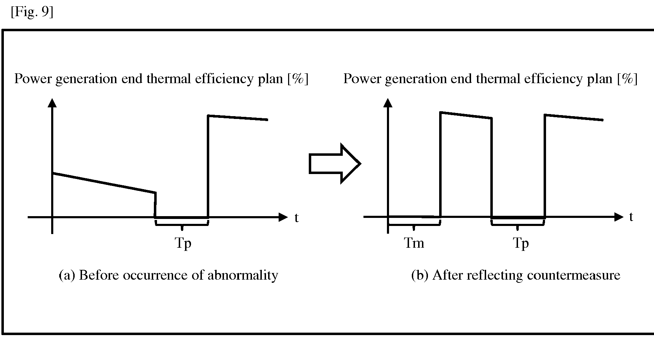

Let us now return to Fig. 7. A power generation end thermal efficiency plan (#19) shown on the lower side of Fig. 7 is a planned value of thermal efficiency of the target plant. For example, the power generation end thermal efficiency plan assumes values such as those shown in Fig. 9. Fig. 9(a) shows a plan before an occurrence of an abnormality. Fig. 9(b) shows a plan after coping with the abnormality. A vertical axis represents thermal efficiency (%) at a power generation end and a horizontal axis represents time. In Fig. 9, the maintenance work period Tm is configured before the routine inspection period Tp in order to cope with the abnormality in a similar manner to Fig. 8.

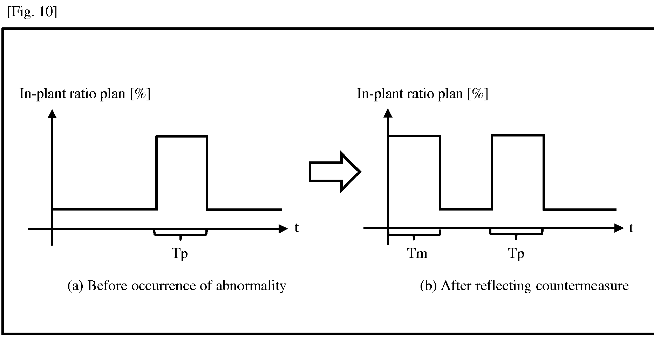

Let us now return to Fig. 7. An in-plant ratio plan (#20) shown on the lower side of Fig. 7 represents a proportion of an in-plant power amount in a planned value of a power generation end power amount of the target plant. For example, the in-plant ratio plan assumes values such as those shown in Fig. 10. Fig. 10(a) shows a plan before an occurrence of an abnormality. Fig. 10(b) shows a plan after coping with the abnormality. In Fig. 10, the maintenance work period Tm is configured before the routine inspection period Tp in order to cope with the abnormality in a similar manner to that described above.

Let us now return to Fig. 7. In Fig. 7, a node number #n is added in order to uniquely specify each index. A relationship between achievement evaluation indexes indicated by the circular elements M1 is input by the user on a GUI (Graphical User Interface) from the input device 25 of the achievement evaluation index relationship management device 2. The input information is managed by a database of the achievement evaluation index relationship 232 to be described later.

The relationship shown in Fig. 7 is merely an example and does not describe all of the achievement evaluation indexes managed by a company. For example, while indexes constituting an achievement evaluation index "expenditures" include "repair expenses" and "personnel expenses" in addition to "fuel expenses", such expenses are omitted in Fig. 7. In addition, while achievement evaluation indexes of sites (power plants) include achievement evaluation indexes of plants other than a plant PA, the achievement evaluation indexes of other plants are omitted in Fig. 7.

Instead of having a user manually input all relationships between achievement evaluation indexes, all of or a part of the relationships between achievement evaluation indexes may be automatically inputted and corrected by the user as appropriate. For example, a configuration may be adopted in which achievement evaluation index relationships of another company to which the company information system 1 has been applied can be used as a template.

Fig. 11 shows an example of a table configuration of the achievement evaluation index relationship 232 held by the achievement evaluation index relationship management device 2. The achievement evaluation index relationship 232 is a database which manages, as a relationship between achievement evaluation indexes, information such as a relational expression for calculating an achievement evaluation index and a number which uniquely specifies a device that manages plan information to be used as a basis of the calculation.

When the user inputs information such as a relational expression and a number which specifies a plan management device 6 from the input device 25 to the achievement evaluation index relationship management device 2, the information is stored in the achievement evaluation index relationship 232.

As fields of a record, the achievement evaluation index relationship 232 includes, for example, a node number 232a, a name 232b, a relational expression 232c, a managing entity 232d, and a policy configuration propriety 232e as items.

The node number 232a stores a number that uniquely specifies an achievement evaluation index. The name 232b stores a name of the achievement evaluation index corresponding to the node number 232a. The relational expression 232c stores a relational expression for calculating a value of the achievement evaluation index corresponding to the node number 232a or a number that uniquely specifies a device which is an acquisition source of the value.

The managing entity 232d stores user information of a user who uses the achievement evaluation index corresponding to the node number 232a. For example, "top management" is stored when the achievement evaluation index is used by the top management and "site" is stored when the achievement evaluation index is used by a site.

The policy configuration propriety 232e stores user information of a user capable of configuring a policy with respect to the achievement evaluation index corresponding to the node number 232a. For example, "top management" is stored in a case of an achievement evaluation index for which a policy can be configured by the top management and "site" is stored in a case of an achievement evaluation index for which a policy can be configured by a site.

As described earlier, since the achievement evaluation index relationship 332, the achievement evaluation index relationship 433, and the achievement evaluation index 533 are copies of the achievement evaluation index relationship 232, a description thereof will be omitted.

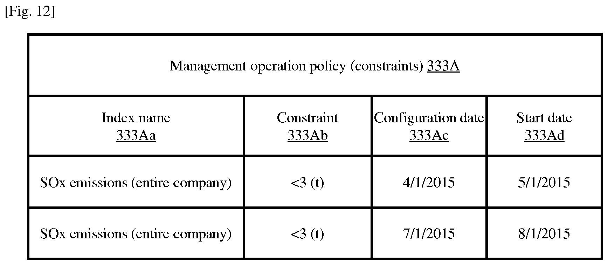

Fig. 12 shows an example of a table configuration related to constraints of the management operation policy 333 held by the management operation policy management device 3.

Management operation policy (constraints) 333A is a database defining constraints that must be satisfied with respect to a management evaluation index in a management operation policy input by the top management.

When the user inputs a management operation policy (constraints) to the management operation policy management device 3 via the input device 35, the management operation policy (constraints) is stored in the management operation policy 333.

As fields of a record, the management operation policy (constraints) 333A includes, for example, an index name 333Aa, a constraint 333Ab, and a configuration date 333Ac as items. A start date 333Ad can be additionally included.

The index name 333Aa stores a name of an achievement evaluation index. The constraint 333Ab stores a constraint with respect to the achievement evaluation index corresponding to the index name 333Aa. The configuration date 333Ac stores a date and time at which the constraint had been configured.

The start date 333Ad stores a date and time at which the management operation policy is to be executed. Usability of the company information system 1 is improved by providing an intentional time difference between the configuration date 333Ac and the start date 333Ad. A description of a start date will be omitted in the following description.

In this case, the management operation policy 434 held by the on-site operation policy management device 4 is a copy of the management operation policy 333 held by the management operation policy management device 3. Therefore, although not illustrated, the management operation policy 434 held by the on-site operation policy management device 4 includes the management operation policy (constraints) 333A described above and management operation policy (target values) 333B and management operation policy (priorities) 333C to be described later. If reference signs are to be added in order to clarify correspondence, the management operation policy 434 held by the on-site operation policy management device 4 includes management operation policy (constraints) 434A, management operation policy (target values) 434B, and management operation policy (priorities) 434C. If reference signs are to be added in order to further clarify correspondence, the management operation policy 434 of the on-site operation policy management device 4 includes index names 434Aa and 434Ba and a priority order 434Ca corresponding to index names 333Aa and 333Ba and a priority order 333Ca. The other items also have similarly corresponding reference signs. In the following description, while illustrations will be omitted due to apparent existence, reference signs that are only used in the specification may be used in order to make correspondences easily understandable.

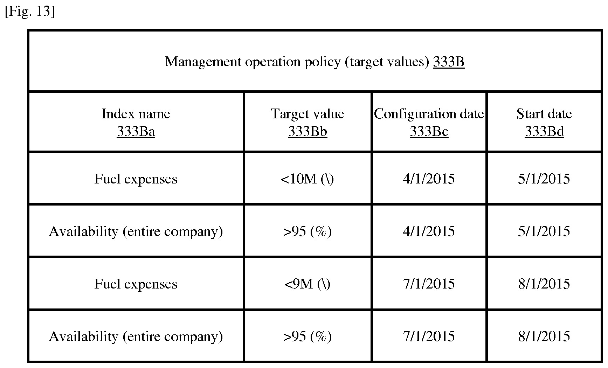

Fig. 13 shows an example of a table configuration related to target values of the management operation policy 333 held by the management operation policy management device 3.

Management operation policy (target values) 333B is a database defining target values with respect to a management evaluation index in a management operation policy input by the top management.

When the user inputs a management operation policy (target values) to the management operation policy management device 3 via the input device 35, the management operation policy (target values) is stored in the management operation policy 333.

As fields of a record, the management operation policy (target values) 333B includes an index name 333Ba, a target value 333Bb, and a configuration date 333Bc as items. A start date 333Bd may be further included.

The index name 333Ba stores a name of an achievement evaluation index. The target value 333Bb stores a target value with respect to the achievement evaluation index corresponding to the index name 333Ba. The configuration date 333Bc stores a date and time at which the target value had been configured.

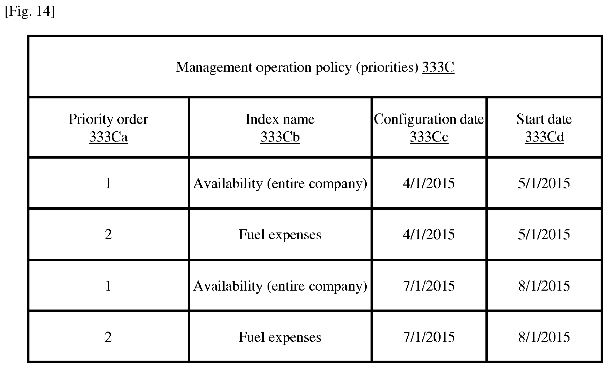

Fig. 14 shows an example of a table configuration diagram related to priorities of the management operation policy 333 of the management operation policy management device 3.

Management operation policy (priorities) 333C is a database defining priorities among indexes with respect to management evaluation indexes in a management operation policy input by the top management.

When the user inputs a management operation policy (priorities) to the management operation policy management device 3 via the input device 35, the management operation policy (priorities) is stored in the management operation policy 333.

As fields of a record, the management operation policy (priorities) 333C includes a priority order 333Ca, an index name 333Cb, and a configuration date 333Cc as items . A start date 333Cd may be further included.

The priority order 333Ca stores a priority order of an achievement evaluation index. The index name 333Cb stores a name of the achievement evaluation index of the priority order 333Ca. The configuration date 333Cc stores a date and time at which a priority had been configured.

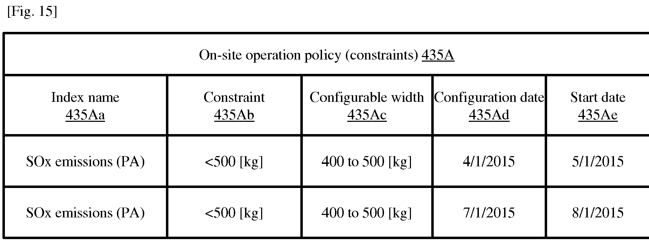

Fig. 15 shows an example of a table configuration related to constraints of the on-site operation policy 435 held by the on-site operation policy management device 4.

On-site operation policy (constraints) 435A is a database defining constraints that must be satisfied with respect to an on-site evaluation index in an on-site operation policy (an operational policy on on-site operations) input by an on-site manager such as a power plant director.

When the user inputs an on-site operation policy (constraints) to the on-site operation policy management device 4 via the input device 45, the on-site operation policy (constraints) is stored in the management operation policy 435.

As fields of a record, the on-site operation policy (constraints) 435A includes, for example, an index name 435Aa, a constraint 435Ab, a configurable width 435Ac, and a configuration date 435Ad as items. A start date 435Ae may be further included.

The index name 435Aa stores a name of an achievement evaluation index. The constraint 435Ab stores a constraint with respect to the achievement evaluation index corresponding to the index name 435Aa. The configurable width 435Ac stores a range in which the constraint 435Ab is changeable. The configuration date 435Ad stores a date and time at which the constraint had been configured.

In this case, the on-site operation policy 534 held by the countermeasure determination support device 5 is a copy of the on-site operation policy 435 held by the on-site operation policy management device 4. Therefore, although not illustrated, the on-site operation policy 534 held by the countermeasure determination support device 5 includes the on-site operation policy (constraints) 435A described above and on-site operation policy (target values) 435B and on-site operation policy (priorities) 435C to be described later. If reference signs are to be added in order to clarify correspondence, the on-site operation policy 534 held by the countermeasure determination support device 5 includes on-site operation policy (constraints) 534A, on-site operation policy (target values) 534B, and on-site operation policy (priorities) 534C.

In addition, in a similar manner to that described with respect to the management operation policy 434 of the on-site operation policy management device 4, the on-site operation policy 534 of the countermeasure determination support device 5 has reference signs corresponding to the respective items of the on-site operation policy 435 of the on-site operation policy management device 4. For example, the on-site operation policy 534 of the countermeasure determination support device 5 includes index names 534Aa and 534Ba and a priority order 534Ca corresponding to index names 435Aa and 435Ba and a priority order 435Ca. This will similarly apply to other items. The corresponding reference signs are used in the description of the specification and illustration thereof is omitted. This is because it is apparent that the reference signs are descriptive reference signs indicating a corresponding relationship.

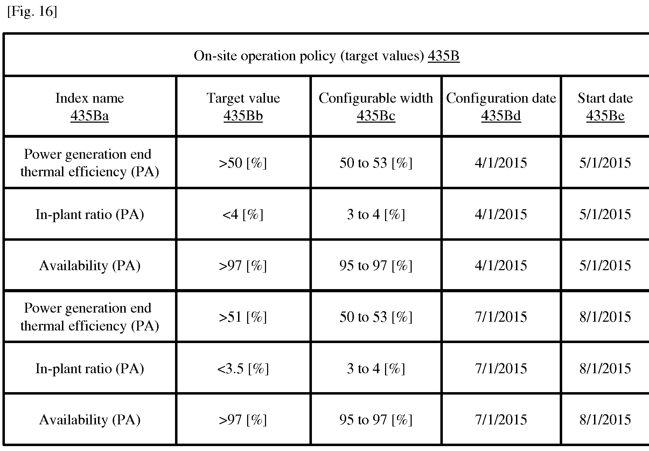

Fig. 16 shows an example of a table configuration related to target values of the on-site operation policy 435 of the on-site operation policy management device 4.

On-site operation policy (target values) 435B is a database defining target values with respect to an on-site evaluation index in an on-site operation policy input by an on-site manager such as a power plant director.

When the user inputs a management operation policy (target values) to the on-site operation policy management device 4 via the input device 45, the management operation policy (target values) is stored in the management operation policy 435.

As fields of a record, the on-site operation policy (target values) 435B includes, for example, an index name 435Ba, a target value 435Bb, a configurable width 435Bc, and a configuration date 435Bd as items. A start date 435Be may be further included.

The index name 435Ba stores a name of an achievement evaluation index. The target value 435Bb stores a target value with respect to the achievement evaluation index corresponding to the index name 435Ba. The configurable width 435Bc stores a range in which the target value 435Bb is changeable. The configuration date 435Bd stores a date and time at which the target value had been configured.

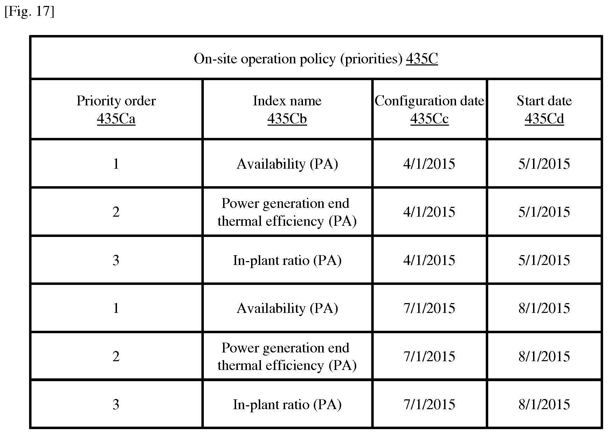

Fig. 17 shows an example of a table configuration related to priorities of the on-site operation policy 435 held by the on-site operation policy management device 4.

On-site operation policy (priorities) 435C is a database defining priorities among indexes with respect to an on-site evaluation index in an on-site operation policy input by an on-site manager such as a power plant director.

When the user inputs a management operation policy (priorities) to the on-site operation policy management device 4 via the input device 45, the management operation policy (priorities) is stored in the on-site operation policy 435.

As fields of a record, the on-site operation policy (priorities) 435C includes, for example, a priority order 435Ca, an index name 435Cb, and a configuration date 435Cc as items. A start date 435Cd may be further included.

The priority order 435Ca stores a priority order of an achievement evaluation index. The index name 435Cb stores a name of an achievement evaluation index of the priority order 435Ca. The configuration date 435Cc stores a date and time at which a priority had been configured.

Fig. 18 is a flow chart showing a management operation policy registration/ transmission process. In this process, when an input of information related to a management operation policy such as constraints, target values, and priorities among achievement evaluation indexes with respect to a management evaluation index is accepted from the user, the information of the management operation policy is transmitted to the on-site operation policy management device 4. Hereinafter, the process executed by the management operation policy registration/ transmission unit 37 may be referred to as a management operation policy registration/ transmission process 37. This will similarly apply to the other processing units 47, 48, and the like.

The management operation policy registration/ transmission processing unit 37 is realized when the CPU 31 executes the management operation policy registration/ transmission program 331.

The management operation policy registration/ transmission unit 37 starts the management operation policy registration/ transmission process when the top management who is the user executes a computer program (S3700).

The management operation policy registration/ transmission unit 37 acquires a list of management evaluation indexes for which a management operation policy can be registered from the achievement evaluation index relationship 332 (S3701).

Specifically, the management operation policy registration/ transmission unit 37 acquires a group of records of which a managing entity (a copy of the managing entity 232d in Fig. 11) in the achievement evaluation index relationship 332 is "top management" and a policy configuration propriety (a copy of the policy configuration propriety 232e in Fig. 11) in the achievement evaluation index relationship 332 is "top management".

The management operation policy registration/ transmission unit 37 displays, on a screen, the acquired list of achievement evaluation indexes to the top management who is the user of the management operation policy registration/ transmission unit 37 (S3702) .

Fig. 19 shows an example of a screen presented to the top management in step S3702. A management operation policy registration screen G1 includes a relationship diagram display section which is positioned on an upper side and which displays an inter-index relationship diagram and a configuration value input section which is positioned on a lower side and which displays a configuration value of an operation policy.

In the relationship diagram display section, a relationship between management evaluation indexes is graphically represented by connecting related circular elements M1 among the circular elements M1 symbolizing management evaluation indexes to each other. Lines connecting the elements M1 to each other have a directionality indicating a cause-and-effect relationship.

In Fig. 19, circular elements M1 corresponding to indexes for which the top management can register a management operation policy are displayed highlighted using bold lines. Instead of highlighted display using bold lines, highlighting may be realized by causing blinking or changing display colors. Due to the highlighted display, the top management can immediately comprehend management evaluation indexes that can be registered and usability is improved.

The top management who is the user of the management operation policy registration/ transmission process 37 selects a management evaluation index for which a management operation policy is to be configured from the management evaluation indexes displayed highlighted in an upper part of the screen and inputs a value to an input section in a lower part of the screen.

Let us now return to Fig. 18. The management operation policy registration/ transmission unit 37 receives, from the user, constraints, target values, and priorities among indexes with respect to management evaluation indexes as information related to a management operation policy (S3703). For example, the user registers a management operation policy on the screen G1 shown in Fig. 19.

The management operation policy registration/ transmission unit 37 registers, in the management operation policy 333, the information of the management operation policy registered by the user in step S3703 (S3704).

The management operation policy registration/ transmission unit 37 transmits, to the on-site operation policy management device 4, the information of the management operation policy registered by the user in step S3703 (S3705). Once the transmission is completed, the management operation policy registration/ transmission process ends.

Figs. 20 and 21 are flow charts showing an on-site operation policy registration/ transmission process. This process is executed by the on-site operation policy registration/ transmission unit 48 of the on-site operation policy management device 4. In this process, with a change in the management operation policy received from the management operation policy management device 3, a necessary change amount to an on-site operation policy is calculated and an on-site operation policy is updated. In addition, in the process, by presenting the user with a display of on-site evaluation indexes related to the management operation policy received from the management operation policy management device 3, an input of an on-site operation policy is accepted from the user and a value of a management evaluation index in a case where the input on-site operation policy is implemented is displayed. Furthermore, in the process, information on the decided on-site operation policy is transmitted to the countermeasure determination support device 5. The on-site operation policy registration/ transmission unit 48 is realized when the CPU 41 executes the on-site operation policy registration/ transmission program 432.

The on-site operation policy registration/ transmission unit 48 starts the on-site operation policy registration/ transmission process upon acquiring a management operation policy from the management operation policy management device 3 (S4800). In addition, the on-site operation policy registration/ transmission unit 48 causes the acquired management operation policy to be stored in the management operation policy 434.

The on-site operation policy registration/ transmission unit 48 acquires, from the management operation policy 434 that is a copy of the management operation policy 333, a record of the management operation policy of which the configuration dates 434Ac (an original reference sign thereof is 333Ac: the same applies hereinafter), 434Bc (333Bc), and 434Cc (333Cc) are next latest dates and times after that written in step S4800 (S4801). Hereinafter, descriptions will be given using reference signs of copy sources.

The on-site operation policy registration/ transmission unit 48 acquires a management operation policy (an immediately previous management operation policy) which had been the last until a record is written in step S4800 . For example, when the configuration dates 333Ac, 333Bc, and 333Cc of the record written in step S4800 is "7/1/2015", the record of "4/1/2015" which is the next latest date and time is acquired.

The on-site operation policy registration/ transmission unit 48 determines whether or not the management evaluation index included in the management policy acquired in step S4800 and the management evaluation index included in the management policy acquired in step S4801 are the same (S4802).

In other words, the on-site operation policy registration/ transmission unit 48 determines, with respect to the management operation policy acquired in step S4800 and the management operation policy acquired in step S4801, whether or not the achievement evaluation indexes defined in all of the constraints, the target values and the priorities are the same (in other words, the achievement evaluation indexes for which the management operation policy is defined are of the same types and only differ in values thereof). When it is determined that the achievement evaluation indexes (the management evaluation indexes) are the same (S4802: YES), a transfer is made to step S4803. On the other hand, when it is determined that the management operation policy acquired in step S4800 and the management operation policy acquired in step S4801 have even one achievement evaluation index that differs (S4802: NO), a transfer is made to S4806.

For example, in the case of the configuration dates 333Ac, 333Bc, and 333Cc of the record written in step S4800 being "7/1/2015", an achievement evaluation index of which a constraint is configured is "SOx emissions (entire company) ", achievement evaluation indexes of which target values are configured are "fuel expenses" and "availability (entire company)", and in achievement evaluation indexes of which priorities are configured, a first priority is "availability (entire company)" and a second priority is "fuel expenses". Therefore, since these indexes are similar to those of the record of "4/1/2015" acquired in step S4801, YES is determined in step S4802 and a transfer is made to step S4803.

With respect to constraints and target values of a management operation policy, the on-site operation policy registration/ transmission unit 48 transmits a request for a combination of possible values of on-site evaluation indexes and corresponding values of the management evaluation indexes to the management/ on-site index exchange unit 47 (S4803) . In response to the request issued in step S4803, with respect to constraints and target values of a management operation policy, the management/ on-site index exchange unit 47 calculates a combination of values of the on-site evaluation indexes and values of the management evaluation indexes and sends the combination as a response to the on-site operation policy registration/ transmission unit 48.

The on-site operation policy registration/ transmission unit 48 receives the response from the management/ on-site index exchange unit 47 (S4804).

The on-site operation policy registration/ transmission unit 48 determines whether or not there is a value satisfying the management operation policy acquired in step S4800 among the values of the management evaluation indexes received in step S4804 (S4805) . When the on-site operation policy registration/ transmission unit 48 determines that there is a value satisfying the management operation policy received in step S4800 among the values of the management evaluation indexes received in step S4804 (S4805: YES), the on-site operation policy registration/ transmission unit 48 adopts an on-site operation policy having a value of an on-site evaluation index corresponding to the value of the management evaluation index as an updated on-site operation policy and makes a transfer to step S4815. Step S4815 will be described later.

On the other hand, when the on-site operation policy registration/ transmission unit 48 determines that there is no value satisfying the management operation policy acquired in step S4800 among the values of the management evaluation indexes received in step S4804 (S4805:NO), the on-site operation policy registration/ transmission unit 48 makes a transfer to step S4806.

It should be noted that, when there are a plurality of values of the management evaluation indexes satisfying the management operation policy, a value nearest to a value of the current on-site operation policy is selected. In addition, the "configurable width" of the updated on-site operation policy is updated by contents similar to those defined in a latest record.

For example, in the case of the configuration dates 333Ac, 333Bc, and 333Cc of the record written in step S4800 being "7/1/2015", a difference from "4/1/2015" acquired in step S4801 is that "fuel expenses" in the management operation policy (target values) has been changed from "< 10M (¥)" to "< 9M (¥)".

In this case, when the combination received in step S4804 includes "power generation end thermal efficiency (plant PA)" of "51 (%)", "in-plant ratio (plant PA)" of "3.5 (%)", and "fuel expenses" of "8.9M (¥)", "fuel expenses" in the management operation policy (target values) satisfy "< 9M (¥)". Therefore, the on-site operation policy registration/ transmission unit 48 adopts "power generation end thermal efficiency (plant PA)" of "51 (%)" and "in-plant ratio (plant PA)" of "3.5 (%)" for the updated on-site operation policy and makes a transfer to step S4815.

When a determination of NO is made in step S4802, the on-site operation policy registration/ transmission unit 48 transmits a management evaluation index for which is configured the management operation policy acquired in step S4800 to the management/ on-site index exchange unit 47 (S4806).

When the management/ on-site index exchange unit 47 receives a management evaluation index from the on-site operation policy registration/ transmission unit 48, the management/ on-site index exchange unit 47 sends, as a response, a relationship between achievement evaluation indexes and an on-site evaluation index which is related to the management evaluation index and for which an on-site operation policy can be configured to the on-site operation policy registration/ transmission unit 48.

When the on-site operation policy registration/ transmission unit 48 acquires a relationship between achievement evaluation indexes and an on-site evaluation index for which an on-site operation policy can be configured (S4807), the on-site operation policy registration/ transmission unit 48 presents the acquired on-site evaluation index to the on-site manager who is the user of the on-site operation policy registration/ transmission process 48 (S4808). This presentation is made through screen display.

For example, in Figs. 23, 24, and 25, management evaluation indexes for which a management operation policy is configured and on-site evaluation indexes which are related to the management evaluation indexes and for which an on-site operation policy can be configured are respectively displayed highlighted using bold lines.

On a screen G2 shown in Fig. 23, "SOx emissions (plant PA)", "power generation end thermal efficiency (plant PA)", and "in-plant ratio (plant PA)" are displayed highlighted as on-site evaluation indexes which are related to the management evaluation index of "SOx emissions (entire company)" of the management operation policy and for which an on-site operation policy can be configured.

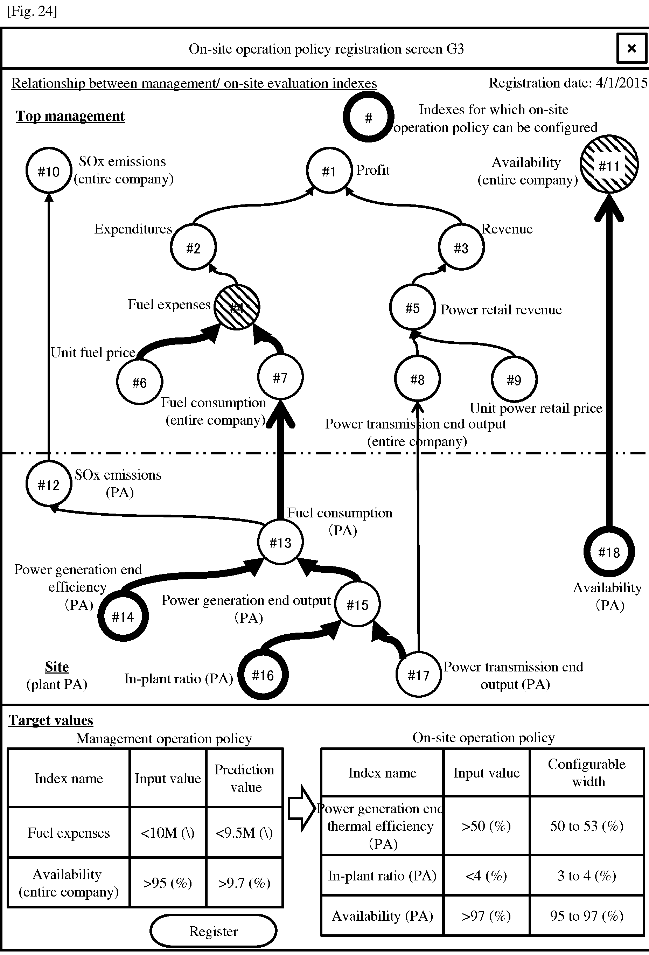

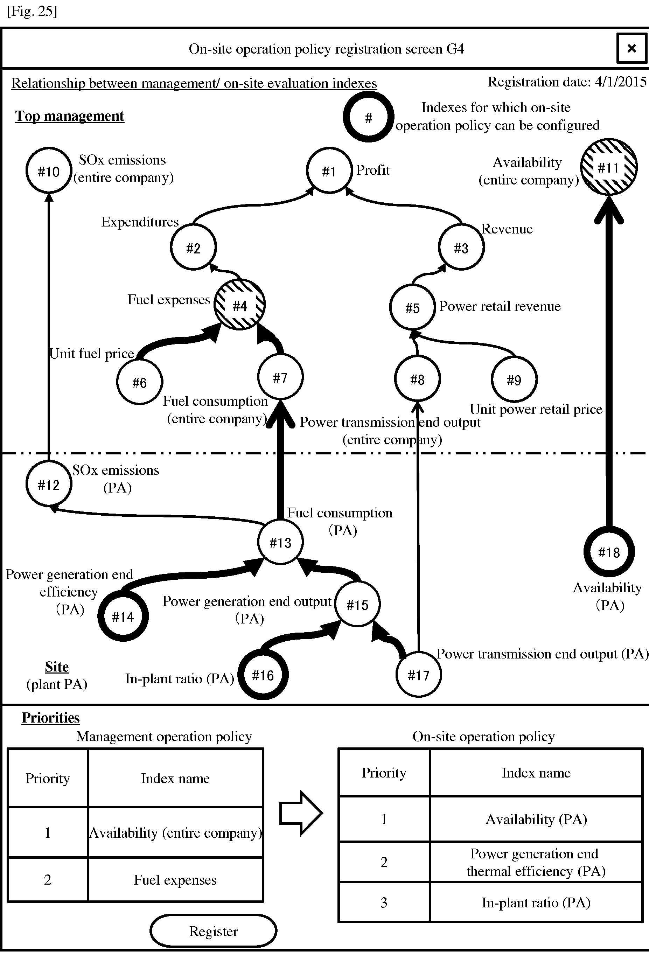

On a screen G3 shown in Fig. 24 and a screen G4 shown in Fig. 25, "power generation end thermal efficiency (plant PA)" and "in-plant ratio (plant PA)" are displayed highlighted as on-site evaluation indexes which are related to the management evaluation index of "fuel expenses" of the management operation policy and for which an on-site operation policy can be configured. In addition, "availability (plant PA)" is displayed highlighted as an on-site evaluation index which is related to the management evaluation index of "availability (entire company)" of the management operation policy and for which an on-site operation policy can be configured.

Let us now return to Fig. 20. The on-site manager who is the user of the on-site operation policy registration/ transmission process selects an index for which an on-site operation policy is to be registered from among the group of on-site evaluation indexes displayed in step S4808 and inputs contents thereof.

The on-site operation policy registration/ transmission unit 48 accepts, from the on-site manager who is the user of the on-site operation policy registration/ transmission process, inputs of constraints, target values, and priorities among indexes with respect to an on-site evaluation index as information related to an on-site operation policy (S4809) . With respect to constraints and target values, the on-site operation policy registration/ transmission unit 48 also accepts input of values of configurable ranges (S4809).

For example, in Fig. 23, an input of "< 500 (kg)" as "SOx emissions (plant PA)" is accepted as a constraint. In addition, an input of "400 to 500 (kg)" is accepted as a configurable range of the index.

In Fig. 24, as target values, inputs of "> 50 (%)" as "power generation end thermal efficiency (plant PA)", "< 4 (%)" as "in-plant ratio (plant PA)", and "> 97 (%)" as "availability (plant PA)" are accepted. In addition, inputs of "50 to 53 (%)", "3 to 4 (%)", and "95 to 97 (%)" are respectively accepted as configurable ranges of the indexes.

In Fig. 25, as priorities among the indexes, inputs of "availability (plant PA)" as "priority 1", "power generation end thermal efficiency (plant PA)" as "priority 2", and "in-plant ratio (plant PA)" as "priority 3" are accepted.

Let us now return to Fig. 20. The on-site operation policy registration/ transmission unit 48 transmits a type of an achievement evaluation index for which the constraints and target values of the on-site operation policy input by the user are defined and a value of the achievement evaluation index to the management/ on-site index exchange unit 47 (S4810). In addition, the on-site operation policy registration/ transmission unit 48 receives, as a response thereto, a value of the management evaluation index corresponding to the value of the on-site evaluation index from the management/ on-site index exchange unit 47 (S4811).

Let us now transfer to Fig. 21. The on-site operation policy registration/ transmission unit 48 displays, on a screen, the value of the management evaluation index received in step S4811 to the on-site manager who is the user of the on-site operation policy registration/ transmission process (S4812).

For example, in Figs. 23 and 24, the value received in step S4811 is displayed in a "prediction value" field of the management operation policy shown on a lower side of the screen. The "prediction value" field is a field indicating a prediction value from an on-site operation policy. In Figs. 23 and 24, only the "prediction value" (a prediction value from an on-site operation policy) corresponding to an "input value" of the on-site operation policy shown on the lower side of the screen is displayed. Alternatively, a value of a management evaluation index corresponding to the value of the on-site evaluation index input to "configurable width" may also be simultaneously displayed in the management operation policy.

The on-site manager who is the user of the on-site operation policy registration/ transmission process determines whether or not the value of the management evaluation index displayed in step S4812 satisfies the management operation policy received in step S4800, and when the on-site manager determines that the value satisfies the management operation policy, the on-site manager depresses a "register" button on the lower side of the screen.

Let us now return to Fig. 21. The on-site operation policy registration/ transmission unit 48 accepts, from the on-site manager who is the user of the on-site operation policy registration/ transmission process, a depression of the "register" button or a re-input of an on-site operation policy (S4813).

The on-site operation policy registration/ transmission unit determines whether or not the register button on the screen has been depressed (S4814). When the on-site operation policy registration/ transmission unit 48 accepts the depression of the "register" button (S4814: YES), the on-site operation policy registration/ transmission unit 48 transfers to step S4815. When the "register" button has not been depressed (S4814: NO), since this means that a re-input has been accepted, a return is made to step S4808 in Fig. 20.

The on-site operation policy registration/ transmission unit 48 causes the operation policy accepted in step S4809 to be stored in the on-site operation policy 435 (S4815). In addition, the on-site operation policy registration/ transmission unit 48 ends the on-site operation policy registration/ transmission process by transmitting the operation policy accepted in step S4809 to the countermeasure determination support device 5 (S4816).

Fig. 22 is a flow chart showing a management/ on-site index exchange process that is executed by the management/ on-site index exchange unit 47. In this process, on the basis of the achievement evaluation index relationship 433, (1) a related on-site evaluation index is specified from a management evaluation index, and (2) a value of the management evaluation index is predicted and calculated from a value of the on-site evaluation index. The management/ on-site index exchange unit 47 is realized when the CPU 41 executes the management/ on-site index exchange computer program 431. The management/ on-site index exchange unit 47 can also be referred to as a management evaluation index/ on-site evaluation index exchange unit 47.

The management/ on-site index exchange unit 47 starts the management/ on-site index exchange process when, with respect to constraints and target values of a management operation policy, the management/ on-site index exchange unit 47 receives a request for a combination of possible values of on-site evaluation indexes and corresponding values of the management evaluation indexes from the management operation policy management device 3 (S4700).

The management/ on-site index exchange unit 47 acquires a record of which the configuration dates 435Ad and 435Bd are a latest date and time from the on-site operation policy (constraints) 435A and the on-site operation policy (target values) 435B, and acquires a configurable width of each achievement evaluation index from the record (S4701).

For example, when the configuration dates 333Ac, 333Bc, and 333Cc of the record written in step S4800 is "7/1/2015", the management/ on-site index exchange unit 47 acquires the record of "4/1/2015" of which the configuration dates 435Ad and 435Bd are a latest date and time, from the on-site operation policy (constraints) 435A and the on-site operation policy (target values) 435B. In addition, the management/ on-site index exchange unit 47 respectively acquires "400 to 500 (kg)" as the configurable width of "SOx emissions (plant PA)", "50 to 53 (%)" as the configurable width of "power generation end thermal efficiency (plant PA)", "3 to 4 (%)" as the configurable width of "in-plant ratio (plant PA)", and "95 to 97 (%)" as the configurable width of "availability (plant PA)".

Next, the management/ on-site index exchange unit 47 calculates a prediction value of the management evaluation index when a value of the on-site evaluation index is changed within a range of the configurable width acquired in step S4701 (S4702).

Specifically, for each achievement evaluation index, the management/ on-site index exchange unit 47 either calculates a value of the achievement evaluation index itself when the on-site evaluation index is changed within the range of the configurable width or calculates a value on the basis of a calculation formula 433c (a copy of the calculation formula 232c in Fig. 11) in other cases.

For example, the management/ on-site index exchange unit 47 calculates prediction values of the respective achievement evaluation indexes including "51 (%)" as "power generation end thermal efficiency (plant PA)", "3.5 (%)" as "in-plant ratio (plant PA)", and values of other achievement evaluation indexes on the basis of the relational expression 433c and, as a result, calculates that "fuel expenses" are "8.9M (¥)".

The management/ on-site index exchange unit 47 ends the management/ on-site index exchange process by transmitting a combination of the values of the on-site evaluation indexes and corresponding values of the management evaluation indexes created in step S4702 to the on-site operation policy registration/ transmission unit 48 (S4703).

On the other hand, the management/ on-site index exchange unit 47 starts the management/ on-site index exchange process when the management/ on-site index exchange unit 47 receives a management evaluation index for which a management operation policy is configured from the on-site operation policy registration/ transmission unit 48 (S4704).

On the basis of the achievement evaluation index relationship 433, the management/ on-site index exchange unit 47 specifies an on-site evaluation index for which the management operation policy acquired in step S4704 is configured, which is related to a management evaluation index, and for which an on-site operation policy can be configured (S4705).

Specifically, the management/ on-site index exchange unit 47 traces the achievement evaluation indexes existing on a lower level than a management evaluation index for which a management operation policy is configured and extracts an achievement evaluation index of which a policy configuration propriety 432e (a copy of the policy configuration propriety 232e in Fig. 11) is "site".

For example, in Fig. 23, as achievement evaluation indexes existing on a lower level of "SOx emissions (entire company)" for which a management operation policy is configured, the management/ on-site index exchange unit 47 traces "SOx emissions (plant PA)", "fuel consumption (plant PA)", "power generation end thermal efficiency (plant PA)", "power generation end output (plant PA)", "in-plant ratio (plant PA)", and "power transmission end output (plant PA)". In addition, as achievement evaluation indexes of which the policy configuration propriety 432e (a copy of the policy configuration propriety 232e in Fig. 11) is "site", the management/ on-site index exchange unit 47 extracts "SOx emissions (plant PA)", "power generation end thermal efficiency (plant PA)", and "in-plant ratio (plant PA)".

In Figs. 24 and 25, as achievement evaluation indexes existing on a lower level of "fuel expenses" for which a management operation policy is configured, the management/ on-site index exchange unit 47 traces "unit fuel price", "fuel consumption (entire company)", "fuel consumption (plant PA)", "power generation end thermal efficiency (plant PA)", "power generation end output (plant PA)", "in-plant ratio (plant PA)", and "power transmission end output (plant PA)". In addition, as achievement evaluation indexes of which the policy configuration propriety 432e (a copy of the policy configuration propriety 232e in Fig. 11) is "site", the management/ on-site index exchange unit 47 extracts "power generation end thermal efficiency (plant PA)" and "in-plant ratio (plant PA)". Furthermore, as an achievement evaluation index existing on a lower level of "availability (entire company)" for which a management operation policy is configured, the management/ on-site index exchange unit 47 traces "availability (plant PA)". In addition, as an achievement evaluation index of which the policy configuration propriety 432e (a copy of the policy configuration propriety 232e in Fig. 11) is "site", the management/ on-site index exchange unit 47 extracts "availability (plant PA)".

The management/ on-site index exchange unit 47 ends the management/ on-site index exchange process by transmitting the relationship between achievement evaluation indexes acquired in step S4705 and the specified on-site evaluation indexes to the on-site operation policy registration/ transmission unit 48 (S4706).

Meanwhile, the management/ on-site index exchange unit 47 starts the management/ on-site index exchange process when the management/ on-site index exchange unit 47 receives a type of an achievement evaluation index for which constraints and target values of an on-site operation policy are defined and a value of the achievement evaluation index from the on-site operation policy registration/ transmission unit 48 (S4707).

The management/ on-site index exchange unit 47 acquires a relationship between achievement evaluation indexes from the achievement evaluation index relationship 433 and predicts and calculates a value of a management evaluation index corresponding to the on-site evaluation index value acquired in step S4707 (S4708).

Specifically, for each achievement evaluation index, the management/ on-site index exchange unit 47 either calculates a value of the achievement evaluation index itself when the value is acquired in step S4707 or calculates a value on the basis of the calculation formula 433c (a copy of the calculation formula 232c in Fig. 11) in other cases.

For example, in Fig. 23, the management/ on-site index exchange unit 47 calculates prediction values of the respective achievement evaluation indexes including "500 (kg)" as "SOx emissions (plant PA)" and values of other achievement evaluation indexes on the basis of the relational expression 433c and, as a result, calculates that "SOx emissions (entire company)" are "2.8 (t)".

In Fig. 24, the management/ on-site index exchange unit 47 calculates prediction values of the respective achievement evaluation indexes including "50 (%)" as "power generation end thermal efficiency (plant PA)", "4 (%)" as "in-plant ratio (plant PA)", "97 (%)" as "availability (plant PA)", and values of other achievement evaluation indexes on the basis of the relational expression 433c. As a result, the management/ on-site index exchange unit 47 calculates that "fuel expenses (entire company)" are "9.5M (¥)" and that "availability (entire company)" is "97 (%)".

The management/ on-site index exchange unit 47 ends the management/ on-site index exchange process by transmitting a value of the management evaluation index corresponding to the value of the on-site evaluation index calculated in step S4708 to the on-site operation policy registration/ transmission unit 48 (S4709).

Fig. 26 is a flow chart showing a process of calculating an influence exerted on an achievement evaluation index and a process of extracting an appropriate countermeasure.

The achievement evaluation index influence calculation process is executed by the achievement evaluation index influence calculation unit 57. The achievement evaluation index influence calculation process predicts a value of each achievement evaluation index in a case where a measure specified in each countermeasure is executed. The appropriate countermeasure extraction process is executed by the appropriate countermeasure extraction unit 58.

The appropriate countermeasure extraction process extracts, on the basis of the prediction value calculated by the achievement evaluation index influence calculation process, a countermeasure suitable for the on-site operation policy and displays the countermeasure. The achievement evaluation index influence calculation unit 57 and the appropriate countermeasure extraction unit 58 are realized when the CPU 51 executes the achievement evaluation index influence calculation program 531 and the appropriate countermeasure extraction program 532.

The achievement evaluation index influence calculation unit 57 starts the achievement evaluation index influence calculation process upon receiving a countermeasure with respect to an abnormality that has occurred in an on-site facility (S5700).

The achievement evaluation index influence calculation unit 57 acquires, from the various plan management devices 6, various plans in a case where an abnormality occurs in an on-site facility and where a measure specified in each countermeasure is executed (S5701).

For example, as described earlier, (a) in Figs. 8 to 10 shows various plans before an abnormality occurs in an on-site facility. (b) in Figs. 8 to 10 shows various plans in a case where "immediate maintenance" is selected as a countermeasure upon an occurrence of an abnormality in an on-site facility. In (b), for the purpose of "immediate maintenance", an operation plan, a power generation plan, a power generation end thermal efficiency, and an in-plant ratio plan during a maintenance work period Tm have been changed from (a).

When execution of a measure is postponed such as when the countermeasure is "maintenance during routine inspection" or "progress observation", there is a possibility that the abnormality having occurred in the on-site facility may worsen. Therefore, various plans of a plurality of patterns can be acquired with respect to one countermeasure. For example, when the measure "progress observation" is selected, since the abnormality may conceivably worsen on the following day or after one week, various plans in a case where the abnormality worsens are acquired from the various plan management devices 6.

The achievement evaluation index influence calculation unit 57 acquires an achievement evaluation index relationship from the achievement evaluation index relationship 533 and calculates a prediction value of each achievement evaluation index in a case where each measure is executed (S5702).

Specifically, on the basis of the abnormality and the various plans when each measure is reflected acquired in step S5701, the achievement evaluation index influence calculation unit 57 calculates the achievement evaluation indexes in an ascending order starting from a lower-level achievement evaluation index using a calculation formula 533c (a copy of the calculation formula 232c in Fig. 11).

As described in step S5701, the various plans may occur in a plurality of patterns with respect to one countermeasure and, in such a case, a prediction value of an achievement evaluation index is expressed by a width.

The achievement evaluation index influence calculation unit 57 ends the achievement evaluation index influence calculation process by transmitting countermeasures and the prediction value, calculated in step S5702, of each achievement evaluation index in a case where the measure specified in each countermeasure is executed to the appropriate countermeasure extraction unit 58 (S5703).

Next, the process executed by the appropriate countermeasure extraction unit 58 will be described.

The appropriate countermeasure extraction unit 58 starts the appropriate countermeasure extraction process upon acquiring, from the achievement evaluation index influence calculation unit 57, respective countermeasures and the prediction value of each achievement evaluation index in a case where the measures thereof are executed (S5800).

The appropriate countermeasure extraction unit 58 acquires an operation policy configured by the on-site manager from the on-site operation policy 534 and extracts a measure suitable for the on-site operation policy from each countermeasure (S5801).

Specifically, first, the appropriate countermeasure extraction unit 58 extracts a countermeasure satisfying a constraint and displays a degree of appropriateness to a target value of each achievement evaluation index with respect to the extracted countermeasure. For example, a degree of appropriateness to a constraint can be obtained by the following mathematical expression.

(1)

When an upper limit value is defined in operation policy

(Upper limit value − prediction value) ÷ upper limit value × 100

... (mathematical expression 1)

(2)

When a lower limit value is defined in operation policy

(− Lower limit value + prediction value) ÷ lower limit value × 100

... (mathematical expression 2)

Due to the normalization described above, the degree of appropriateness assumes 0 (%) when the prediction value matches the upper or lower limit value. When the prediction value is equal to or smaller than the upper limit value, the value of the degree of appropriateness increases as the degree of appropriateness separates from the upper limit value. When the prediction value exceeds the upper limit value, the value of the degree of appropriateness assumes a negative value. When the prediction value is equal to or larger than the lower limit value, the value of the degree of appropriateness increases as the degree of appropriateness separates from the lower limit value and assumes a negative value when the degree of appropriateness is smaller than the lower limit value.

For example, a degree of appropriateness to a target value can be obtained by the following mathematical expression.

(3)

When an upper limit value is defined in operation policy

(Upper limit value − prediction value) ÷ upper limit value × 100

+ 100 ... (mathematical expression 3)

(4)

When a lower limit value is defined in operation policy

(− Lower limit value + prediction value) ÷ lower limit value × 100

+ 100 ... (mathematical expression 4)

Due to the normalization described above, the degree of appropriateness assumes 100 (%) when the prediction value matches the upper or lower limit value. When the prediction value is equal to or smaller than the upper limit value, the degree of appropriateness assumes a value of 100 (%) or more. When the prediction value is larger than the upper limit value, the degree of appropriateness assumes a value larger than 100 (%). When the prediction value is equal to or larger than the lower limit value, the degree of appropriateness assumes a value of 100 (%) or more. When the prediction value is smaller than the lower limit value, the degree of appropriateness assumes a value smaller than 100 (%) .

For example, in Fig. 27 to be described later, while the constraint of "SOx emissions (plant PA)" is "500 (kg)", since a plan 3 (progress observation) assumes a value of "500 to 550 (kg)", the constraint is not satisfied.

In step S5802, the appropriate countermeasure extraction unit 58 displays the countermeasure extracted in step S5801 which is suitable for the on-site operation policy on a screen.

The appropriate countermeasure extraction unit 58 displays the countermeasure on a screen as shown in, for example, Fig. 27. Fig. 27 shows a configuration example of a countermeasure determination support screen G5. The screen G5 is largely divided into three display areas. A first area is positioned on a left side of the screen and shows, in a table format, influences exerted on achievement evaluation indexes of each plan (countermeasure). A second area is positioned on a right side of the screen and shows a graphical comparison of indexes among plans (countermeasures). A third area is positioned in a lower part on the right side of the screen and shows, in a radar chart format, a balance among indexes of each plan.

In the area showing an "influence exerted on achievement evaluation index" on the left side of the screen G5, the user can confirm a prediction value of the achievement evaluation index and a degree of appropriateness to the on-site operation policy in a case where each countermeasure is executed. In the area showing a "comparison of indexes among plans" on the right side of the screen G5, the user can compare, for each achievement evaluation index, a degree of appropriateness to the on-site operation policy in a case where each countermeasure is executed. In the area showing a "balance among indexes of each plan" in the lower part on the right side of the screen G5, the user can confirm a balance among degrees of appropriateness of the respective achievement evaluation indexes for each countermeasure.

A display sequence of the achievement evaluation indexes in the area showing the "influence exerted on achievement evaluation index" and the area showing the "comparison of indexes among plans" is a sequence of indexes defined by constraints of the on-site operation policy, followed by indexes defined by priorities of the on-site operation policy.

The on-site worker who is a user of the appropriate countermeasure extraction process selects a countermeasure by reference to the degree of appropriateness to the on-site operation policy of each achievement evaluation index in a case where each countermeasure displayed in step S5802 is executed.

For example, in Fig. 27, between the plan 1 "immediate maintenance" and the plan 2 "maintenance during routine inspection" which satisfy the constraint, "maintenance during routine inspection" having a higher degree of appropriateness with respect to the achievement evaluation index "availability (plant PA)" having the highest priority is selected.

The appropriate countermeasure extraction unit 58 accepts an input of a selection result of a countermeasure from the on-site worker who is a user of the appropriate countermeasure extraction process (S5803).

The appropriate countermeasure extraction unit 58 ends the appropriate countermeasure extraction process by outputting a work ledger related to the selected countermeasure (S5804).

In Fig. 27, a work ledger instructing maintenance with respect to an abnormality is issued during a routine inspection. Since the on-site worker who is seldom clearly conscious of a relationship with a management operation policy usually makes determinations in a mechanical manner on the side of caution, "immediate maintenance" is selected as a countermeasure. This often results in excessive maintenance.

Conversely, in the company information system 1 according to the present embodiment, appropriate on-site maintenance determinations in accordance with a management operation policy can be made. As a result, according to the present embodiment, the on-site worker can appropriately select measures such as "maintenance during routine inspection" and "progress observation" depending on the situation and, as a result, excessive maintenance can be resolved. Consequently, according to the present embodiment, the number of starts and stops of facilities for the purpose of maintenance can be reduced and risks in operating facilities such as a start failure risk can be reduced. In addition, maintenance cost can be reduced.

In the present embodiment, while a case of using two operation policies, namely, a management operation policy that is configured with respect to a management evaluation index and an on-site operation policy that is configured with respect to an on-site evaluation index has been described, a configuration in which only one operation policy is used may be adopted instead. In this case, for example, the management operation policy management device 3 may accept a registration of an operation policy and transmit contents thereof to the countermeasure determination support device 5.

In addition, while a case where the company information system 1 is constituted by the achievement evaluation index relationship management device 2, the management operation policy management device 3, the on-site operation policy management device 4, and the countermeasure determination support device 5 has been described, at least a part of the devices may be integrated.

While a case where the achievement evaluation index relationship management device 2, the management operation policy management device 3, the on-site operation policy management device 4, the countermeasure determination support device 5, and the various plan management devices 6 operate on a stand-alone basis has been described, alternatively, a configuration may be adopted in which a user terminal is provided and functions of the respective devices 2 to 6 are used via the user terminal.

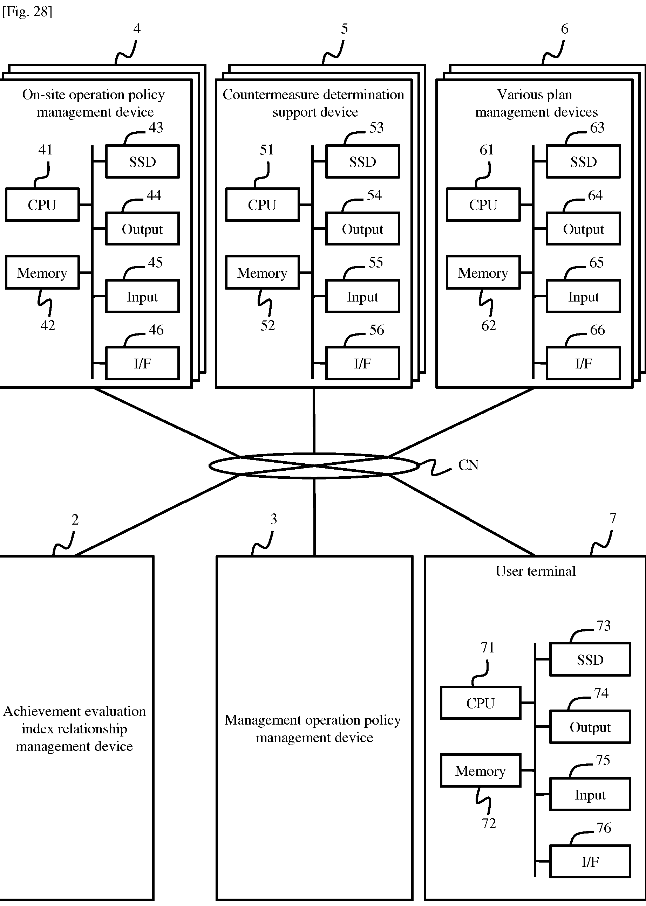

Fig. 28 shows a configuration example in which the achievement evaluation index relationship management device 2, the management operation policy management device 3, the on-site operation policy management device 4, the countermeasure determination support device 5, the various plan management devices 6, and a user terminal 7 are connected by the communication path CN.

The user terminal 7 includes, for example, a CPU 71, a memory 72, a storage device 73, an output device 74, an input device 75, and a communication interface 76. The user can transmit information to the achievement evaluation index relationship management device 2, the management operation policy management device 3, the on-site operation policy management device 4, the countermeasure determination support device 5, and the various plan management devices 6 from the user terminal 7 via the network CN. Conversely, the user can read and use information from the respective devices 2 to 6 via the user terminal 7.

Second Embodiment

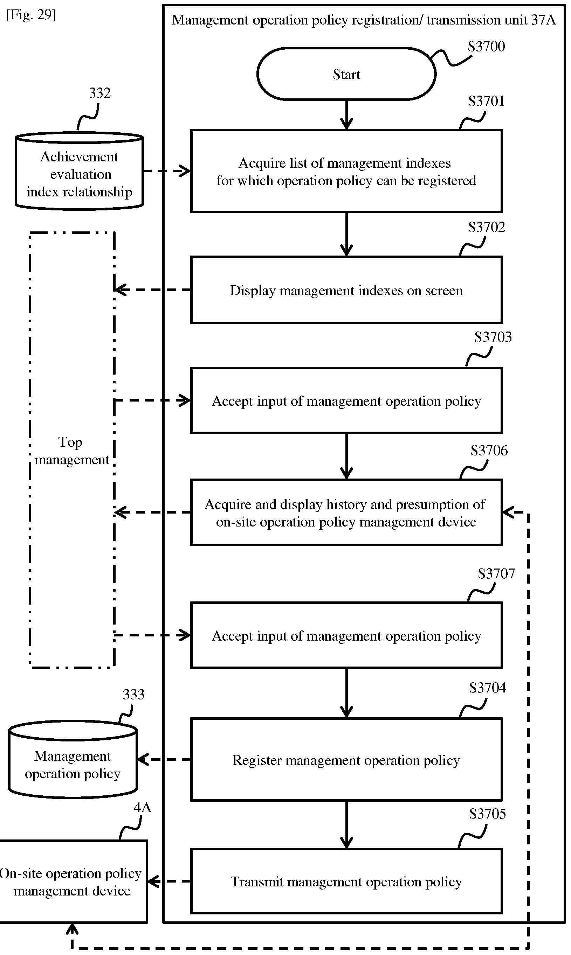

A second embodiment will be described with reference to Fig. 29. Since the following embodiments including the present embodiment correspond to modifications of the first embodiment, descriptions of the embodiments will focus on differences from the first embodiment. In the present embodiment, history data managed by the on-site operation policy management device 4, presumptions on the basis of the history data, or the like are made usable when the top management decides a management operation policy.

Fig. 29 shows a process of a management operation policy registration/ transmission unit 37A. In the present process, new steps S3706 and S3707 have been added between steps S3703 and S3704 in the process described with reference to Fig. 18.

When the management operation policy registration/ transmission unit 37A accepts an input of a management operation policy from the top management (S3703), the management operation policy registration/ transmission unit 37A inquires the on-site operation policy management device 4 about the accepted management operation policy (S3706). In addition, the management operation policy registration/ transmission unit 37A acquires, from the on-site operation policy management device 4, previous on-site operation policies related to the accepted management operation policy or a result of presumption about on-site operation policies that are presumed to be related to the management operation policy (S3706). The management operation policy registration/ transmission unit 37A presents the previous on-site operation policies or the presumption result to the top management by displaying the same on a screen (S3706).

The top management can correct an initially input management operation policy on the basis of the previous on-site operation policies or the presumption result presented by the management operation policy registration/ transmission unit 37A. When the management operation policy registration/ transmission unit 37A once again accepts an input of a management operation policy from the top management (S3707), the management operation policy registration/ transmission unit 37A registers the management operation policy in the management operation policy 333 (S3704).

The present embodiment configured in this manner produces similar operational advantages to the first embodiment. Furthermore, in the present embodiment, since a management operation policy can be decided by referring to a history or a presumption result of on-site operation policies, usability of the user such as the top management is improved.

Third Embodiment

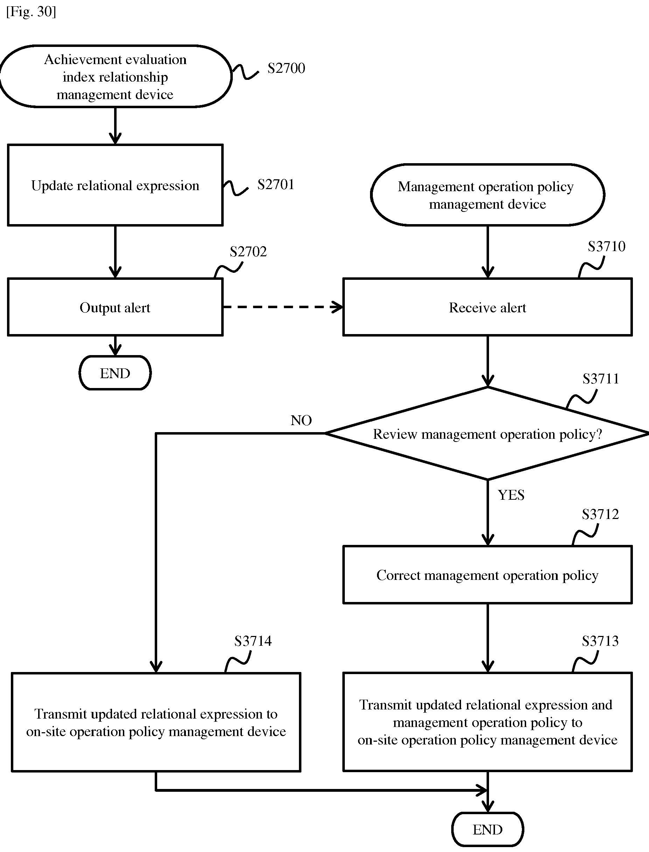

A third embodiment will be described with reference to Fig. 30. In the present embodiment, when the achievement evaluation index relationship 232 is updated, an alert is notified to the management operation policy management device 3 to support, when necessary, a revision operation of a management operation policy or an on-site operation policy.

Fig. 30 is a flow chart showing a process executed by the achievement evaluation index relationship management device 2 and a process executed by the management operation policy management device 3 upon an update of an achievement evaluation index relationship.

When a relational expression of a relationship between achievement evaluation indexes is updated by the user (S2701), the achievement evaluation index relationship management device 2 transmits the relationship between achievement evaluation indexes together with an alert for notifying that an update has been made to the management operation policy management device 3 (S2702).

When the management operation policy management device 3 receives the alert and the relationship between achievement evaluation indexes (S3710), the management operation policy management device 3 updates the achievement evaluation index relationship 332 and, at the same time, determines whether or not to review contents of the management operation policy 333 (S3711). For example, when a portion related to a management operation policy currently being configured in the achievement evaluation index relationship is changed, the management operation policy management device 3 makes a determination to review the management operation policy (S3711: YES). Alternatively, a configuration may be adopted in which, when an automatic determination of whether or not the management operation policy is to be reviewed is performed in step S3711, a result of the automatic determination is presented to the top management to receive approval.

When the management operation policy is to be reviewed (S3711: YES), the management operation policy management device 3 updates the management operation policy in accordance with the update of the achievement evaluation index relationship (S3712). An approval by the top management may be sought with respect to a management operation policy having been automatically corrected by the management operation policy management device 3 or the top management may manually correct a management operation policy and input the corrected management operation policy to the management operation policy management device 3.

The management operation policy management device 3 transmits the updated achievement evaluation index relationship and the management operation policy to the on-site operation policy management device 4 (S3713).

On the other hand, when the management operation policy need not be reviewed even though the achievement evaluation index relationship is updated (S3711: NO), the management operation policy management device 3 only transmits the updated achievement evaluation index relationship to the on-site operation policy management device 4 (S3714).

When the on-site operation policy management device 4 receives the updated achievement evaluation index relationship and the management operation policy from the management operation policy management device 3 in S3713, the on-site operation policy management device 4 updates the achievement evaluation index relationship 433 and, at the same time, creates an on-site operation policy by a process such as that described in the first embodiment. Subsequently, the on-site operation policy management device 4 transmits the achievement evaluation index relationship and the on-site operation policy to the countermeasure determination support device 5. When the countermeasure determination support device 5 receives the updated achievement evaluation index relationship and the on-site operation policy from the on-site operation policy management device 4, the countermeasure determination support device 5 updates the achievement evaluation index relationship 533 and the on-site operation policy 534.

When the on-site operation policy management device 4 receives the updated achievement evaluation index relationship from the management operation policy management device 3 in S3714, the on-site operation policy management device 4 updates the achievement evaluation index relationship 433. Subsequently, the on-site operation policy management device 4 transmits the achievement evaluation index relationship to the countermeasure determination support device 5. When the countermeasure determination support device 5 receives the updated achievement evaluation index relationship from the on-site operation policy management device 4, the countermeasure determination support device 5 updates the achievement evaluation index relationship 533.

The present embodiment configured in this manner also produces similar operational advantages to the first embodiment. The present embodiment can also be combined with the second embodiment. According to the present embodiment, since whether or not to review a management operation policy can be determined when an achievement evaluation index relationship is updated, usability of the user such as the top management is improved.

Fourth Embodiment

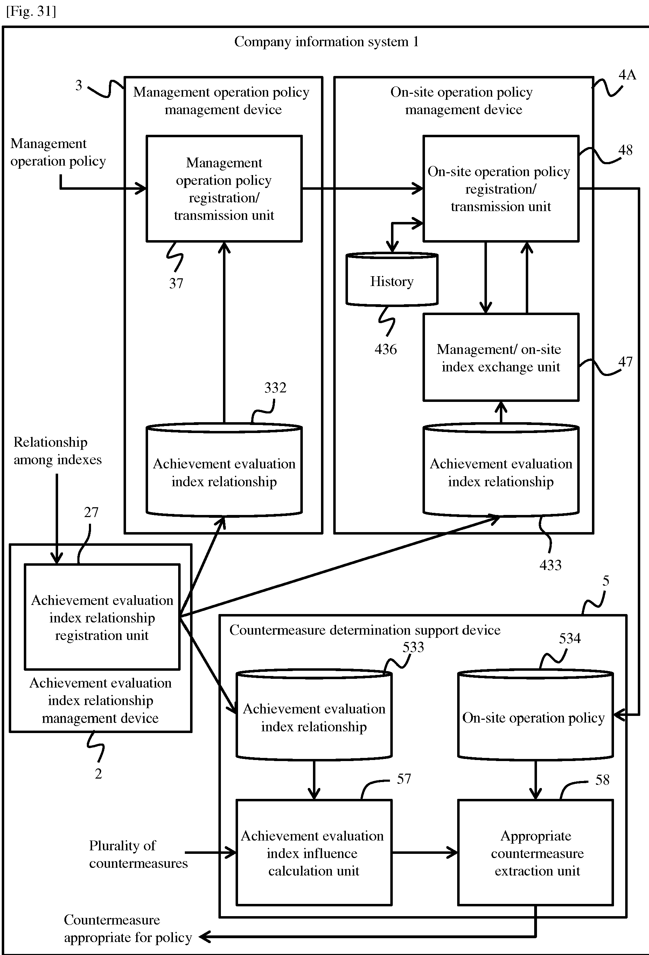

A fourth embodiment will be described with reference to Fig. 31. When an input management operation policy is a management operation policy that has been previously configured (when types of indexes match and values thereof also match those of a previously configured management operation policy), an on-site operation policy management device 4A according to the present embodiment accepts the management operation policy and acquires, from a history database 436, contents of an on-site operation policy that had been configured when the management operation policy had previously been configured. In addition, the on-site operation policy management device 4A configures the acquired contents as an on-site operation policy. The history database 436 manages contents of management operation policies and contents of on-site operation policies in association with each other.

The present embodiment configured in this manner also produces similar operational advantages to the first embodiment. Furthermore, in the present embodiment, when a management operation policy that is the same as a previously accepted management operation policy is accepted, since contents of a previously configured on-site operation policy are acquired from the history database 436 and an on-site operation policy is configured using previous contents, usability is improved.

It is to be understood that the present invention is not limited to the embodiments described above and is intended to cover various modifications. The components of the embodiments presented above have been described in detail to provide a clear understanding of the present invention, and the present invention is not necessarily limited to embodiments including all of the components described above. In addition, with respect to at least a part of the components of the embodiments, a new component can be added thereto, an existing component can be deleted therefrom, or an existing component can be replaced with another component.

The respective components, functions, processing units, processing means, and the like described above may be partially or entirely realized by hardware by, for example, designing with integrated circuits or the like. In addition, the present invention can also be realized by a computer program code of software that realizes the functions of the embodiments. In this case, a computer is provided with a storage medium on which the computer program code is recorded, and a CPU included in the computer reads the computer program code stored in the storage medium. In this case, the computer program code itself that is read from the storage medium is to realize the functions of the embodiments described above, and the computer program code itself and the storage medium storing the computer program code are to constitute the present invention.

Furthermore, by distributing, via a network, the computer program code of software that realizes functions of the embodiments, the computer program code may be stored in storage means such as a hard disk and a memory of a computer or a storage medium such as a CD-RW and a CD-R, and a CPU included in the computer may read the computer program code stored in the storage means or the storage medium and execute the computer program code.

[Reference Signs List]

| | |
|---|---|
| 1 | Company information system |
| 2 | Achievement evaluation index relationship management device |
| 3 | Management operation policy management device |
| 4 | On-site operation policy management device |
| 5 | Countermeasure determination support device |
| 27 | Achievement evaluation index relationship registration unit |
| 37 | Management operation policy registration/ transmission unit |
| 47 | Management/ on-site index exchange unit |
| 48 | On-site operation policy registration/ transmission unit |
| 57 | Achievement evaluation index influence calculation unit |
| 58 | Appropriate countermeasure extraction unit |

**Claims**

1. A company information system that provides information in accordance with a management operation policy of a company,
the company information system comprising at least one computer, wherein
the computer is configured to:

   acquire a management operation policy that is a policy on management operations, the management operation policy including a management evaluation index, which relates to management among a plurality of achievement evaluation indexes prepared in advance, and a value of the management evaluation index;
   acquire an on-site operation policy that is a policy on on-site operations, the on-site operation policy including an on-site evaluation index, which relates to on-site work among the plurality of achievement evaluation indexes, and a value of the on-site evaluation index;
   acquire achievement evaluation index relationship information which defines a relationship between the plurality of achievement evaluation indexes;
   when the management operation policy is updated, update the on-site operation policy according to the update of the management operation policy on the basis of the management operation policy and the achievement evaluation index relationship information;
   calculate, on the basis of the achievement evaluation index relationship information and a plurality of countermeasures prepared in advance, each prediction value of the plurality of achievement evaluation indexes in a case where the plurality of countermeasures are executed; and
   extract, as an appropriate countermeasure, a countermeasure appropriate for the updated on-site operation policy from among the plurality of countermeasures, on the basis of the calculated prediction values and the updated on-site operation policy.

2. The company information system according to claim 1, wherein
the computer is configured to:

   calculate, when the management operation policy is updated, a prediction value of the management evaluation index in a case where the value of the on-site evaluation index is changed within a configurable range configured in advance, on the basis of the achievement evaluation index relationship information; and
   update, by adopting a change amount when the calculated prediction value satisfies the updated management operation policy as a change amount of the on-site operation policy, the on-site operation policy according to the update of the management operation policy.

3. The company information system according to claim 1, wherein
the computer is configured to realize:

   a function of acquiring and storing the management operation policy including the management evaluation index and the value of the management evaluation index;
   a function of acquiring and storing the on-site operation policy including the on-site evaluation index and the value of the on-site evaluation index;

a function of acquiring and storing the achievement evaluation index relationship information;

a function of specifying, upon accepting an update of the management operation policy, the on-site evaluation index corresponding to the management evaluation index included in the accepted management operation policy, on the basis of the achievement evaluation index relationship information;

a function of providing a user with the specified on-site evaluation index and accepting an input of the on-site operation policy by having the user configure a value with respect to the on-site evaluation index;

a function of calculating a prediction value of the management evaluation index on the basis of the value configured to the on-site evaluation index and the achievement evaluation index relationship information;

a function of providing the user with the calculated prediction value and updating the on-site operation policy when accepting a decision on the on-site operation policy from the user;

a function of respectively calculating, on the basis of the achievement evaluation index relationship information and a plurality of countermeasures prepared in advance, prediction values of the plurality of achievement evaluation indexes in a case where the plurality of countermeasures are executed; and

a function of extracting, as an appropriate countermeasure, a countermeasure most appropriate for the updated on-site operation policy from among the plurality of countermeasures, on the basis of the calculated prediction values and the updated on-site operation policy.

4. The company information system according to claim 1, wherein
the plurality of countermeasures are plans including countermeasures in a case where an abnormality occurs in on-site work.

5. The company information system according to claim 1, wherein
the management operation policy is configured so as to include constraints, target values, and priorities among management evaluation indexes, the constraints, the target values, and the priorities being configured to the management evaluation indexes, and
the on-site operation policy is configured so as to include constraints, target values, and priorities among on-site evaluation indexes, the constraints, the target values, and the priorities being configured to the on-site evaluation indexes.

6. The company information system according to claim 1, wherein
the computer is configured to:

extract, from among the plurality of countermeasures, countermeasures in which the calculated prediction value satisfies a constraint of the on-site operation policy;
calculate a degree of appropriateness of the extracted countermeasures with respect to the on-site operation policy by normalizing the extracted countermeasures with a target value of the on-site operation policy; and

selecting a countermeasure with the highest degree of appropriateness as the appropriate countermeasure.

7. The company information system according to claim 1, wherein
the computer is configured to:

display a relationship among all of the management evaluation indexes on a screen; and
highlight and display management evaluation indexes for which a management operation policy can be configured among the displayed management evaluation indexes.

8. The company information system according to claim 1, wherein
the computer is configured to:

display a relationship among all achievement evaluation indexes on a screen; and
highlight and display a prescribed on-site evaluation index which relates to a management evaluation index for which the management operation policy has been configured and for which an on-site operation policy can be configured among the displayed achievement evaluation indexes, and a relationship between the prescribed on-site evaluation index and the management evaluation index.

9. The company information system according to claim 6, wherein
the computer is configured to schematize and display, for each of the extracted countermeasures, a balance of the degree of appropriateness of the extracted countermeasure to the on-site operation policy.

**10.** The company information system according to claim 1, wherein
the computer is configured to, before a user decides to update the management operation policy, extract the on-site operation policy corresponding to the management operation policy from history and present the extracted on-site operation policy to the user.

**11.** The company information system according to claim 1, wherein
the computer is configured to notify a user of the necessity of reviewing the management operation policy when the achievement evaluation index relationship information is updated.

**12.** The company information system according to claim 1, wherein
a time difference is configured between a configuration date and time and an execution date and time of the management operation policy or between a configuration date and time and an execution date and time of the on-site operation policy.

**13.** A company information providing method of providing information in accordance with a management operation policy of a company,
the company information providing method causing a computer to:

acquire a management operation policy that is a policy on management operations, the management operation policy including a management evaluation index, which relates to management among a plurality of achievement evaluation indexes prepared in advance, and a value of the management evaluation index;
acquire an on-site operation policy that is a policy on on-site operations, the on-site operation policy including an on-site evaluation index, which relates to on-site work among the plurality of achievement evaluation indexes, and a value of the on-site evaluation index;
acquire achievement evaluation index relationship information which defines a relationship between the plurality of achievement evaluation indexes;
when the management operation policy is updated, update the on-site operation policy according to the update of the management operation policy on the basis of the management operation policy and the achievement evaluation index relationship information;
calculate, on the basis of the achievement evaluation index relationship information and a plurality of countermeasures prepared in advance, each prediction value of the plurality of achievement evaluation indexes in a case where the plurality of countermeasures are executed;
extract, as an appropriate countermeasure, a countermeasure appropriate for the updated on-site operation policy from among the plurality of countermeasures, on the basis of the calculated prediction values and the updated on-site operation policy; and
provide a user with at least the extracted countermeasure through a screen.

**Amended claims under Art. 19.1 PCT**

**1.** (Amended) A company information system that provides information in accordance with a management operation policy of a company,
the company information system comprising at least one computer, wherein
the computer is configured to:

acquire a management operation policy that is a policy on management operations, the management operation policy including a management evaluation index, which relates to management among a plurality of achievement evaluation indexes prepared in advance, and a value of the management evaluation index;
acquire an on-site operation policy that is a policy on on-site operations, the on-site operation policy including an on-site evaluation index, which relates to on-site work among the plurality of achievement evaluation indexes, and a value of the on-site evaluation index;
acquire achievement evaluation index relationship information which defines a relationship between the plurality of achievement evaluation indexes; and
when the management operation policy is updated, update the on-site operation policy according to the update of the management operation policy on the basis of the management operation policy and the achievement evaluation index relationship information.

**2.** (Amended) The company information system according to claim 1, wherein
the computer is further configured to:

calculate, on the basis of the achievement evaluation index relationship information and a plurality of countermeasures prepared in advance, each prediction value of the plurality of achievement evaluation indexes in a case where the plurality of countermeasures are executed; and
extract, as an appropriate countermeasure, a countermeasure appropriate for the updated on-site operation policy from among the plurality of countermeasures, on the basis of the calculated prediction values and the updated on-site operation policy.

**3.** (Amended) The company information system according to claim 1, wherein
the computer is configured to:

calculate, when the management operation policy is updated, a prediction value of the management evaluation index in a case where the value of the on-site evaluation index is changed within a configurable range configured in advance, on the basis of the achievement evaluation index relationship information; and
update, by adopting a change amount when the calculated prediction value satisfies the updated management operation policy as a change amount of the on-site operation policy, the on-site operation policy according to the update of the management operation policy.

**4.** (Amended) The company information system according to claim 2, wherein
the computer is configured to realize:

a function of acquiring and storing the management operation policy including the management evaluation index and the value of the management evaluation index;
a function of acquiring and storing the on-site operation policy including the on-site evaluation index and the value of the on-site evaluation index;
a function of acquiring and storing the achievement evaluation index relationship information;
a function of specifying, upon accepting an update of the management operation policy, the on-site evaluation index corresponding to the management evaluation index included in the accepted management operation policy, on the basis of the achievement evaluation index relationship information;
a function of providing a user with the specified on-site evaluation index and accepting an input of the on-site operation policy by having the user configure a value with respect to the on-site evaluation index;
a function of calculating a prediction value of the management evaluation index on the basis of the value configured to the on-site evaluation index and the achievement evaluation index relationship information; and
a function of providing the user with the calculated prediction value and updating the on-site operation policy when accepting a decision on the on-site operation policy from the user;

**5.** (Amended) The company information system according to claim 4, wherein
the computer is further configured to realize:

a function of respectively calculating, on the basis of the achievement evaluation index relationship information and a plurality of countermeasures prepared in advance, prediction values of the plurality of achievement evaluation indexes in a case where the plurality of countermeasures are executed; and
a function of extracting, as an appropriate countermeasure, a countermeasure most appropriate for the updated on-site operation policy from among the plurality of countermeasures, on the basis of the calculated prediction values and the updated on-site operation policy.

**6.** (Amended) The company information system according to claim 2, wherein
the plurality of countermeasures are plans including countermeasures in a case where an abnormality occurs in on-site work.

**7.** (Amended) The company information system according to claim 1, wherein
the management operation policy is configured so as to include constraints, target values, and priorities among management evaluation indexes, the constraints, the target values, and the priorities being configured to the management evaluation indexes, and
the on-site operation policy is configured so as to include constraints, target values, and priorities among on-site evaluation indexes, the constraints, the target values, and the priorities being configured to the on-site evaluation indexes.

8. (Amended) The company information system according to claim 2, wherein
the computer is configured to:

extract, from among the plurality of countermeasures, countermeasures in which the calculated prediction value satisfies a constraint of the on-site operation policy;
calculate a degree of appropriateness of the extracted countermeasures with respect to the on-site operation policy by normalizing the extracted countermeasures with a target value of the on-site operation policy; and

selecting a countermeasure with the highest degree of appropriateness as the appropriate countermeasure.

9. (Amended) The company information system according to claim 1, wherein
the computer is configured to:

display a relationship among all of the management evaluation indexes on a screen; and
highlight and display management evaluation indexes for which a management operation policy can be configured among the displayed management evaluation indexes.

10. (Amended) The company information system according to claim 1, wherein
the computer is configured to:

display a relationship among all achievement evaluation indexes on a screen; and
highlight and display a prescribed on-site evaluation index which relates to a management evaluation index for which the management operation policy has been configured and for which an on-site operation policy can be configured among the displayed achievement evaluation indexes, and a relationship between the prescribed on-site evaluation index and the management evaluation index.

11. (Amended) The company information system according to claim 2, wherein
the computer is configured to:

calculate a degree of appropriateness of the extracted countermeasures with respect to the on-site operation policy by normalizing the extracted countermeasures with a target value of the on-site operation policy; and
schematize and display, for each of the extracted countermeasures, a balance of the degree of appropriateness of the extracted countermeasure to the on-site operation policy.

12. (Amended) The company information system according to claim 1, wherein
the computer is configured to, before a user decides to update the management operation policy, extract the on-site operation policy corresponding to the management operation policy from history and present the extracted on-site operation policy to the user.

13. (Amended) The company information system according to claim 1, wherein
the computer is configured to notify a user of the necessity of reviewing the management operation policy when the achievement evaluation index relationship information is updated.

14. (Added) The company information system according to claim 1, wherein
a time difference is configured between a configuration date and time and an execution date and time of the management operation policy or between a configuration date and time and an execution date and time of the on-site operation policy.

15. (Added) A company information providing method of providing information in accordance with a management operation policy of a company,
the company information providing method causing a computer to:

acquire a management operation policy that is a policy on management operations, the management operation policy including a management evaluation index, which relates to management among a plurality of achievement evaluation indexes prepared in advance, and a value of the management evaluation index;
acquire an on-site operation policy that is a policy on on-site operations, the on-site operation policy including an on-site evaluation index, which relates to on-site work among the plurality of achievement evaluation indexes, and a value of the on-site evaluation index;

acquire achievement evaluation index relationship information which defines a relationship between the plurality of achievement evaluation indexes; and

when the management operation policy is updated, update the on-site operation policy according to the update of the management operation policy on the basis of the management operation policy and the achievement evaluation index relationship information.

**16.** (Added) The company information providing method according to claim 15,

further causing a computer to, after updating the on-site operation policy according to the update of the management operation policy:

calculate, on the basis of the achievement evaluation index relationship information and a plurality of countermeasures prepared in advance, each prediction value of the plurality of achievement evaluation indexes in a case where the plurality of countermeasures are executed;

extract, as an appropriate countermeasure, a countermeasure appropriate for the updated on-site operation policy from among the plurality of countermeasures, on the basis of the calculated prediction values and the updated on-site operation policy; and

provide a user with at least the extracted countermeasure through a screen.

[Fig. 1]

Company information system 1

Management operation policy management device 3

On-site operation policy management device 4

Management operation policy

Management operation policy registration/ transmission unit 37

On-site operation policy registration/ transmission unit 48

Management/ on-site index exchange unit 47

Achievement evaluation index relationship 332

Achievement evaluation index relationship 433

Relationship among indexes

Achievement evaluation index relationship registration unit 27

Achievement evaluation index relationship management device 2

Countermeasure determination support device 5

Achievement evaluation index relationship 533

On-site operation policy 534

Plurality of countermeasures

Achievement evaluation index influence calculation unit 57

Appropriate countermeasure extraction unit 58

Countermeasure appropriate for policy

[Fig. 2]

**On-site operation policy management device** — 4

CPU — 41
Memory — 42
SSD — 43
Output — 44
Input — 45
I/F — 46

**Countermeasure determination support device** — 5

CPU — 51
Memory — 52
SSD — 53
Output — 54
Input — 55
I/F — 56

**Various plan management devices** — 6

CPU — 61
Memory — 62
SSD — 63
Output — 64
Input — 65
I/F — 66

CN

**Achievement evaluation index relationship management device** — 2

CPU — 21
Memory — 22
SSD — 23
Output — 24
Input — 25
I/F — 26

**Management operation policy management device** — 3

CPU — 31
Memory — 32
SSD — 33
Output — 34
Input — 35
I/F — 36

[Fig. 3]

Storage device 23

231

Achievement evaluation index
relationship registration program

232

Achievement evaluation
index relationship

[Fig. 4]

Storage device 33

331

Management operation policy
registration/ transmission program

332

Achievement evaluation
index relationship

333

Management operation policy

[Fig. 5]

Storage device 43

431

Management index/ on-site index
exchange program

432

On-site operation policy
registration/ transmission program

433

Achievement evaluation
index relationship

434

Management operation policy

435

On-site operation policy

[Fig. 6]

| | Storage device 53 |
|---|---|
| **531** | |
| Achievement evaluation index influence calculation program | **533** Achievement evaluation index relationship |
| **532** | |
| Appropriate countermeasure extraction program | **534** On-site operation policy |

[Fig. 7]

SOx emissions
(entire company)

#10

Profit

#1 — M1

Availability
(entire company)

#11

Expenditures

#2

Revenue

#3

Fuel expenses  #4

#5  Power retail revenue

**Top management**

#6

#7

#8

#9

Unit fuel price

Fuel consumption
(entire company)

Power transmission end output
(entire company)

Unit power retail price

#12  SOx emissions
(PA)

Fuel consumption
(PA)

#13

Availability
(PA)

#18

Power generation end
efficiency
(PA)

Power generation end output
(PA)

#14

#15

**Site**
(plant PA)

In-plant ratio
(PA)

#16

Power transmission end output
(PA)

#17

M2

#19

#20

#21

#22

Power generation end
thermal efficiency plan
(PA)

In-plant ratio plan
(PA)

Power generation plan
(PA)

Operation plan
(PA)

[Fig. 8]

Operation plan,
Power generation plan [MWh]

Operation plan,
Power generation plan [MWh]

Tp

Tm          Tp

(a) Before occurrence of abnormality

(b) After reflecting countermeasure

[Fig. 9]

Power generation end thermal efficiency plan [%]

Power generation end thermal efficiency plan [%]

t

Tp

(a) Before occurrence of abnormality

t

Tm

Tp

(b) After reflecting countermeasure

[Fig. 10]

In-plant ratio plan [%]

In-plant ratio plan [%]

Tp

Tm          Tp

(a) Before occurrence of abnormality

(b) After reflecting countermeasure

[Fig. 11]

| Achievement evaluation index relationship 232 | | | | |
|---|---|---|---|---|
| Node number 232a | Name 232b | Relational expression 232c | Managing entity 232d | Policy configuration propriety 232e |
| #1 | Profit | #3 - #2 | Top management | Top management |
| #2 | Expenditures | #4 | Top management | Top management |
| #3 | Revenue | #5 + #6 | Top management | Top management |
| #4 | Fuel expenses | #7 × #8 | Top management | Top management |
| #5 | Power retail revenue | #8 × #9 | Top management | Top management |
| #6 | Unit fuel price | 1M (V/t) | Top management | — |
| #7 | Fuel consumption (entire company) | #13 | Top management | — |
| #8 | Power transmission end output (entire company) | #17 | Top management | Top management |
| #9 | Unit power retail price | 10 (V/kWh) | Top management | Top management |
| #10 | SOx emissions (entire company) | #12 | Top management | Top management |
| #11 | Availability (entire company) | #18 | Top management | Top management |
| #12 | SOx emissions (PA) | #13 × 0.5 | Site | Site |
| #13 | Fuel consumption (PA) | 30 × #15 ÷ #14 | Site | — |
| #14 | Power generation end thermal efficiency (PA) | Average value of #19 | Site | Site |
| #15 | Power generation end output (PA) | #17 ÷ (1 - #16 ÷ 100) | Site | — |
| #16 | In-plant ratio (PA) | Average value of #20 | Site | Site |
| #17 | Power transmission end output (PA) | Integrated value of #21 | Site | — |
| #18 | Availability (PA) | Average value of #22 | Site | Site |
| #19 | Power generation end thermal efficiency plan (PA) | Device 0001 | Site | — |
| #20 | In-plant ratio plan (PA) | Device 0002 | Site | — |
| #21 | Power generation plan (PA) | Device 0003 | Site | — |
| #22 | Operation plan (PA) | Device 0004 | Site | — |

[Fig. 12]

| Management operation policy (constraints) 333A | | | |
|---|---|---|---|
| Index name<br>333Aa | Constraint<br>333Ab | Configuration date<br>333Ac | Start date<br>333Ad |
| SOx emissions (entire company) | <3 (t) | 4/1/2015 | 5/1/2015 |
| SOx emissions (entire company) | <3 (t) | 7/1/2015 | 8/1/2015 |

[Fig. 13]

| Management operation policy (target values) 333B | | | |
|---|---|---|---|
| Index name<br>333Ba | Target value<br>333Bb | Configuration date<br>333Bc | Start date<br>333Bd |
| Fuel expenses | <10M (\) | 4/1/2015 | 5/1/2015 |
| Availability (entire company) | >95 (%) | 4/1/2015 | 5/1/2015 |
| Fuel expenses | <9M (\) | 7/1/2015 | 8/1/2015 |
| Availability (entire company) | >95 (%) | 7/1/2015 | 8/1/2015 |

[Fig. 14]

| Management operation policy (priorities) 333C | | | |
|---|---|---|---|
| Priority order<br>333Ca | Index name<br>333Cb | Configuration date<br>333Cc | Start date<br>333Cd |
| 1 | Availability (entire company) | 4/1/2015 | 5/1/2015 |
| 2 | Fuel expenses | 4/1/2015 | 5/1/2015 |
| 1 | Availability (entire company) | 7/1/2015 | 8/1/2015 |
| 2 | Fuel expenses | 7/1/2015 | 8/1/2015 |

[Fig. 15]

| On-site operation policy (constraints) 435A | | | | |
|---|---|---|---|---|
| Index name 435Aa | Constraint 435Ab | Configurable width 435Ac | Configuration date 435Ad | Start date 435Ae |
| SOx emissions (PA) | <500 [kg] | 400 to 500 [kg] | 4/1/2015 | 5/1/2015 |
| SOx emissions (PA) | <500 [kg] | 400 to 500 [kg] | 7/1/2015 | 8/1/2015 |

[Fig. 16]

| On-site operation policy (target values) 435B | | | | |
|---|---|---|---|---|
| Index name<br>435Ba | Target value<br>435Bb | Configurable width<br>435Bc | Configuration date<br>435Bd | Start date<br>435Be |
| Power generation end thermal efficiency (PA) | >50 [%] | 50 to 53 [%] | 4/1/2015 | 5/1/2015 |
| In-plant ratio (PA) | <4 [%] | 3 to 4 [%] | 4/1/2015 | 5/1/2015 |
| Availability (PA) | >97 [%] | 95 to 97 [%] | 4/1/2015 | 5/1/2015 |
| Power generation end thermal efficiency (PA) | >51 [%] | 50 to 53 [%] | 7/1/2015 | 8/1/2015 |
| In-plant ratio (PA) | <3.5 [%] | 3 to 4 [%] | 7/1/2015 | 8/1/2015 |
| Availability (PA) | >97 [%] | 95 to 97 [%] | 7/1/2015 | 8/1/2015 |

[Fig. 17]

| On-site operation policy (priorities) 435C | | | |
|---|---|---|---|
| Priority order 435Ca | Index name 435Cb | Configuration date 435Cc | Start date 435Cd |
| 1 | Availability (PA) | 4/1/2015 | 5/1/2015 |
| 2 | Power generation end thermal efficiency (PA) | 4/1/2015 | 5/1/2015 |
| 3 | In-plant ratio (PA) | 4/1/2015 | 5/1/2015 |
| 1 | Availability (PA) | 7/1/2015 | 8/1/2015 |
| 2 | Power generation end thermal efficiency (PA) | 7/1/2015 | 8/1/2015 |
| 3 | In-plant ratio (PA) | 7/1/2015 | 8/1/2015 |

[Fig. 18]

Management operation policy registration/ transmission unit 37

```
                                  ╭──────────────╮ S3700
                                  │    Start     │
                                  ╰──────────────╯
                                         │
                                         ▼
332                               ┌──────────────────────────────┐ S3701
┌────────────────────┐            │ Acquire list of management    │
│                    │            │ indexes for which operation   │
│ Achievement        │──────────▶ │ policy can be registered      │
│ evaluation         │            └──────────────────────────────┘
│ index relationship │                     │
└────────────────────┘                     ▼
                                  ┌──────────────────────────────┐ S3702
                    ◀─────────────│ Display management indexes    │
┌ ─ ─ ─ ─ ─ ─ ─ ─ ┐              │ on screen                     │
                                  └──────────────────────────────┘
│                 │
                                               S3703
│ Top management  │              ┌──────────────────────────────┐
                  │──────────────▶│ Accept input of management   │
│                                │ operation policy              │
                                  └──────────────────────────────┘
└ ─ ─ ─ ─ ─ ─ ─ ─ ┘                     │
                                         ▼
333                               ┌──────────────────────────────┐ S3704
┌────────────────────┐            │ Register management operation │
│ Management         │ ◀──────────│ policy                        │
│ operation policy   │            └──────────────────────────────┘
└────────────────────┘                     │
                                           ▼
4                                 ┌──────────────────────────────┐ S3705
┌────────────────────┐            │ Transmit management operation │
│ On-site operation  │ ◀──────────│ policy                        │
│ policy management  │            └──────────────────────────────┘
│ device             │
└────────────────────┘
```

[Fig. 19]

**Management operation policy registration screen G1** | ✖

<u>Relationship between achievement evaluation indexes</u>    Registration date: 4/1/2015

(#) Indexes for which management operation policy can be configured

SOx emissions (entire company) — #10

Profit — #1

Availability (entire company) — #11

Expenditures — #2

Revenue — #3

Fuel expenses — #4

#5 — Power retail revenue

#6 — Unit fuel price

#7 — Fuel consumption (entire company)

#8 — Power transmission end output (entire company)

#9 — Unit power retail price

**Constraints**

| Index name | Input value |
|---|---|
| SOx emissions (entire company) | <3 (t) |
| | |
| | |

**Target values**

| Index name | Input value |
|---|---|
| Fuel expenses | <10M (\) |
| Availability (entire company) | >95 (%) |
| | |

**Priorities**

| Priority | Index name |
|---|---|
| 1 | Availability (entire company) |
| 2 | Fuel expenses |
| | |

Register

[Fig. 20]

On-site operation policy registration/ transmission unit 48

| Management device 3 | ----> | Receive and register management operation policy | S4800 | ----> | 434 |

S4801

Acquire immediately previous management operation policy

Policy 434 ----> 

S4802

Same index?   NO / YES

S4806   S4803

Index exchange unit 47 <---- Transmit index <---- Request transmission of combination of values ----> 47

S4807

Acquire on-site index

S4804

Receive combination of values <----

S4808

Display on-site index

On-site manager <----

S4805

Conforms with policy?   NO / YES

S4809

Accept input of policy <----

To S4815

Index exchange unit 47 <---- Transmit on-site index value   S4810

Receive management index value   S4811

To S4812

[Fig. 21]

On-site operation policy registration/ transmission unit 48

S4805

YES

S4808

S4811

S4812

Display value of management index

On-site
manager

S4813

Accept registration/ re-input
of on-site operation policy

S4814

Register?    NO

YES    S4815

On-site operation policy
435

Register on-site operation policy

S4816

Countermeasure
determination
support device
5

Transmit on-site operation policy

48

[Fig. 22]

**48**

**Management index/ on-site index exchange unit 47**

S4803

Receive request for combination of on-site index value and management index value — S4700

Acquire configurable width of each achievement evaluation index — S4701 ← 435

Calculate management index value in case where on-site index is changed — S4702 ← 433

S4804 ← Transmit combination of on-site index value and management index value — S4703

S4806

Receive index for which management operation policy has been defined — S4704

Specify on-site index — S4705 ← 433

S4807 ← Transmit on-site index — S4706

S4810

Receive index for which on-site operation policy has been defined — S4707

Calculate management index value corresponding to on-site index value — S4708 ← 433

S4811 ← Transmit management index value — S4709

[Fig. 23]

On-site operation policy registration screen G2 [×]

Relationship between management/ on-site evaluation indexes

Registration date: 4/1/2015

**Top management**

( # ) Indexes for which on-site operation policy can be configured

(#10) SOx emissions (entire company)

(#1) Profit

Availability (entire company) (#11)

Expenditures (#2)

Revenue (#3)

Fuel expenses (#4)

(#5) Power retail revenue

(#6)

(#7)

(#8)

(#9)

Unit fuel price    Fuel consumption (entire company)

Power transmission end output (entire company)

Unit power retail price

— · — · — · — · — · — · — · — · — · — · — · — · — · — · — · — · — · —

(#12) SOx emissions (PA)

Fuel consumption (PA)

(#13)

Power generation end efficiency (PA) (#14)

Power generation end output (PA) (#15)

(#18)

Availability (PA)

**Site** (plant PA)

(#16) In-plant ratio (PA)

(#17) Power transmission end output (PA)

**Constraints**

Management operation policy

| Index name | Input value | Prediction value |
|---|---|---|
| SOx emissions (entire company) | <3 (t) | <2.8 (t) |

⇨

On-site operation policy

| Index name | Input value | Configurable width |
|---|---|---|
| SOx emissions (entire company) | <500 (kg) | 400 to 500 (kg) |

( Register )

[Fig. 24]

On-site operation policy registration screen G3 | ✕

Relationship between management/ on-site evaluation indexes          Registration date: 4/1/2015

**Top management**

# — Indexes for which on-site operation policy can be configured

#10 — SOx emissions (entire company)

#1 — Profit

Availability (entire company) — #11

Expenditures — #2

Revenue — #3

Fuel expenses — #4

#5 — Power retail revenue

Unit fuel price — #6

#7 — Fuel consumption (entire company)

#8 — Power transmission end output (entire company)

#9 — Unit power retail price

#12 — SOx emissions (PA)

Fuel consumption (PA) — #13

Power generation end efficiency (PA) — #14

Power generation end output (PA) — #15

Availability (PA) — #18

**Site** (plant PA)

In-plant ratio (PA) — #16

#17 — Power transmission end output (PA)

**Target values**

Management operation policy

| Index name | Input value | Prediction value |
|---|---|---|
| Fuel expenses | <10M (\) | <9.5M (\) |
| Availability (entire company) | >95 (%) | >9.7 (%) |

Register

On-site operation policy

| Index name | Input value | Configurable width |
|---|---|---|
| Power generation end thermal efficiency (PA) | >50 (%) | 50 to 53 (%) |
| In-plant ratio (PA) | <4 (%) | 3 to 4 (%) |
| Availability (PA) | >97 (%) | 95 to 97 (%) |

[Fig. 25]

On-site operation policy registration screen G4 [×]

Relationship between management/ on-site evaluation indexes

Registration date: 4/1/2015

**Top management**

# — Indexes for which on-site operation policy can be configured

#10 — SOx emissions (entire company)

#1 — Profit

Availability (entire company) — #11

#2 — Expenditures

#3 — Revenue

Fuel expenses — #4

#5 — Power retail revenue

#6 — Unit fuel price

#7 — Fuel consumption (entire company)

#8 — Power transmission end output (entire company)

#9 — Unit power retail price

#12 — SOx emissions (PA)

#13 — Fuel consumption (PA)

#14 — Power generation end efficiency (PA)

#15 — Power generation end output (PA)

#16 — In-plant ratio (PA)

#17 — Power transmission end output (PA)

#18 — Availability (PA)

**Site** (plant PA)

**Priorities**

Management operation policy

| Priority | Index name |
|---|---|
| 1 | Availability (entire company) |
| 2 | Fuel expenses |

On-site operation policy

| Priority | Index name |
|---|---|
| 1 | Availability (PA) |
| 2 | Power generation end thermal efficiency (PA) |
| 3 | In-plant ratio (PA) |

Register

[Fig. 26]

Achievement evaluation index influence calculation unit 57

S5700　Receive countermeasure

6

Various plan management devices

S5701　Acquire various plans reflecting abnormality and countermeasure

Achievement evaluation index relationship

S5702　Calculate prediction value of achievement evaluation index in case where countermeasure is executed

533

S5703　Transmit countermeasure and prediction value of achievement evaluation index

S5800　Receive countermeasure and prediction value of achievement evaluation index

534

On-site operation policy

S5801　Extract measure appropriate for on-site policy from among countermeasures

On-site worker

Display extracted countermeasure

S5802

S5803　Accept selection result of countermeasure

S5804　Output work ledger

Appropriate countermeasure extraction unit 58

[Fig. 27]

**Countermeasure determination support screen G5** ☒

☐ Plan 1 (immediate maintenance)

| KPI | Value | Degree of appropriateness |
|---|---|---|
| Sox emissions (PA) | 300 kg | 40% |
| Availability (PA) | 70% | 72% |
| Power generation end thermal efficiency (PA) | 49% | 98% |
| In-plant ratio (PA) | 3% | 125% |

∟ Plan 2 (maintenance during routine inspection)

| KPI | Value | Degree of appropriateness |
|---|---|---|
| Sox emissions (PA) | 450 to 480 kg | 4 to 10% |
| Availability (PA) | 70 to 90% | 72 to 93% |
| Power generation end thermal efficiency (PA) | 10 to 40% | 20 to 80% |
| In-plant ratio (PA) | 3 to 3.8% | 105 to 125% |

☐ Plan 3 (progress observation) : not appropriate for operation policy

| KPI | Value | Degree of appropriateness |
|---|---|---|
| SOx emissions (PA) | 500 to 550 kg | -10 to 0% |
| Availability (PA) | 70 to 90% | 72 to 93% |
| Power generation end thermal efficiency (PA) | 10 to 30% | 20 to 60% |
| In-plant ratio (PA) | 3 to 3.8% | 105 to 125% |

( Register )

KPI1 (SOx emissions (plant A))

Planned countermeasure 100%    0%    100%
Plan 1
Plan 2
Plan 3

KPI2 (Availability (plant A))

Planned countermeasure 100%    0%    100%
Plan 1
Plan 2
Plan 3

KPI3 (Power generation end thermal efficiency (plant A))

Planned countermeasure 100%    0%    100%
Plan 1
Plan 2
Plan 3

KPI1
KPI4    KPI2
KPI3

------ Plan 1
— — — Plan 2

[Fig. 28]

On-site operation policy
management device — 4

43 SSD

41 CPU

44 Output

Memory 45 Input

42 46 I/F

Countermeasure determination
support device — 5

53 SSD

51 CPU

54 Output

Memory 55 Input

52 56 I/F

Various plan
management devices — 6

63 SSD

61 CPU

64 Output

Memory 65 Input

62 66 I/F

CN

Achievement evaluation
index relationship
management device — 2

Management operation policy
management device — 3

User terminal — 7

73 SSD

71 CPU

74 Output

Memory 75 Input

72 76 I/F

[Fig. 29]

**Management operation policy registration/ transmission unit 37A**

332

Achievement evaluation index relationship

S3700

Start

S3701

Acquire list of management indexes for which operation policy can be registered

S3702

Display management indexes on screen

S3703

Accept input of management operation policy

Top management

S3706

Acquire and display history and presumption of on-site operation policy management device

S3707

Accept input of management operation policy

333

Management operation policy

S3704

Register management operation policy

4A

On-site operation policy management device

S3705

Transmit management operation policy

[Fig. 30]

```
       ╭─────────────────────╮
       │ Achievement evaluation │       S2700
       │   index relationship   │  ╭~
       │   management device    │
       ╰─────────────────────╯
                  │
                  ▼
       ┌─────────────────────┐
       │ Update relational    │         S2701
       │    expression        │  ╭~
       └─────────────────────┘
```

Achievement evaluation index relationship management device — S2700

Update relational expression — S2701

Output alert — S2702

END

Management operation policy management device

Receive alert — S3710

Review management operation policy? — S3711

NO

YES

Correct management operation policy — S3712

Transmit updated relational expression to on-site operation policy management device — S3714

Transmit updated relational expression and management operation policy to on-site operation policy management device — S3713

END

[Fig. 31]

**Company information system 1**

3 — Management operation policy management device

4A

On-site operation policy management device

Management operation policy →

Management operation policy registration/ transmission unit

37

On-site operation policy registration/ transmission unit

48

History

436

Management/ on-site index exchange unit

47

332

Achievement evaluation index relationship

Achievement evaluation index relationship

433

Relationship among indexes →

27

Achievement evaluation index relationship registration unit

Achievement evaluation index relationship management device

2

5

Countermeasure determination support device

533

Achievement evaluation index relationship

534

On-site operation policy

57

58

Plurality of countermeasures →

Achievement evaluation index influence calculation unit

Appropriate countermeasure extraction unit

Countermeasure appropriate for policy ←

## INTERNATIONAL SEARCH REPORT

| | International application No. |
|---|---|
| | PCT/JP2017/038163 |

**A. CLASSIFICATION OF SUBJECT MATTER**
Int. Cl. G06Q10/06(2012.01)i

According to International Patent Classification (IPC) or to both national classification and IPC

**B. FIELDS SEARCHED**

Minimum documentation searched (classification system followed by classification symbols)
Int. Cl. G06Q10/06

Documentation searched other than minimum documentation to the extent that such documents are included in the fields searched
Published examined utility model applications of Japan     1922-1996
Published unexamined utility model applications of Japan   1971-2017
Registered utility model specifications of Japan           1996-2017
Published registered utility model applications of Japan   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-32097 A (HITACHI, LTD.) 12 February 2009, entire text, all drawings (Family: none) | 1-13 |
| A | JP 2004-102326 A (TOSHIBA CORP.) 02 April 2004, entire text, all drawings (Family: none) | 1-13 |
| A | JP 2010-123098 A (BUNSAN FA GIJUTSU KENKYUSHO KK) 03 June 2010, entire text, all drawings (Family: none) | 1-13 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| | |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/038163 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2015-207229 A (KANAGAWA UNIVERSITY) 19 November 2015, entire text, all drawings (Family: none) | 1-13 |
| A | JP 2001-350893 A (AMTEC INC.) 21 December 2001, entire text, all drawings & US 2002/0106613 A1 | 1-13 |
| A | US 2011/0061013 A1 (TARGET BRANDS, INC.) 10 March 2011, entire text, all drawings (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004318245 A